(19)

**Europäisches Patentamt**
**European Patent Office**
**Office européen des brevets**

(11) **EP 4 715 427 A1**

(12) **EUROPEAN PATENT APPLICATION**

(43) Date of publication:
25.03.2026 Bulletin 2026/13

(21) Application number: 25200423.9

(22) Date of filing: 05.09.2025

(51) International Patent Classification (IPC):
*G01S 13/58* (2006.01)     *G01S 13/66* (2006.01)
*G01S 13/86* (2006.01)     *G06T 7/20* (2017.01)
*G06T 7/292* (2017.01)

(52) Cooperative Patent Classification (CPC):
**G01S 13/867; G01S 13/58; G01S 13/66;**
**G06T 7/20; G06T 7/292**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **20.09.2024 SE 2450932**

(71) Applicant: **Topgolf Sweden AB**
**182 33 Danderyd (SE)**

(72) Inventor: **JOHANSSON, Dennis**
**148 92 Ösmo (SE)**

(74) Representative: **Fish & Richardson P.C.**
**Highlight Business Towers**
**Mies-van-der-Rohe-Straße 8**
**80807 München (DE)**

(54) **METHOD AND SYSTEM FOR OPTICALLY TRACKING MOVING OBJECTS**

(57) Method for tracking an object (10) moving through a three-dimensional space (1) within a field of view (111) of a digital camera (110), comprising: obtaining from a radar (120) directional information (126) regarding the object (10) and from the digital camera (110) a series of consecutively captured images (122); determining a region of interest (123) corresponding to a location in the consecutively captured images (122) of the object (10); determining if a pixel (124) is a blob candidates based on region of interest (123) and form correlating blobs (125) across the images (122) to determine a trajectory (11). The determining blob candidates (124) is performed based on the region of interest (123) by determining of what pixels are blob candidates as a function of the region of interest.

**Fig. 1**

EP 4 715 427 A1

**Description**

**BACKGROUND OF THE INVENTION**

The present invention relates to a method and a system for tracking moving objects.

Moving objects can be tracked using a combination of a radar device and a camera device. A radar may be used to measure a radial distance, and possibly also a speed, of the object in relation to the radar. A camera may be used to image a viewport region and to detect the object based on image analysis. For instance, groups of pixels, called "blobs", corresponding to a moving object depicted in the image can be identified and used to measure a location of the object in relation to the camera.

Such solutions can be used to track moving flying or free-falling objects following respective trajectories through a region of space surveilled by such radar and camera. Examples including golf balls, baseballs and footballs.

In general, a radar can measure radial distance and speed with relative accuracy, whereas angular measurements are less accurate. A camera, on the other hand, can be used to measure a location of the object within a two-dimensional projection of the viewport with relative accuracy, whereas radial distance and speed can be measured only with poorer accuracy.

By relating a region in space viewed by the radar to a corresponding region in space viewed by the camera, such as by using a coordinate system transformation, measurements from the radar can be combined with measurements from the camera to achieve an estimation about a trajectory of an object moving through space.

US 10338209 B2 discloses a radar working together with a camera to measure a trajectory of a moving sports ball. Images received from the camera are analyzed to identify objects. To minimize the risk of detecting false positive objects, such as leaves moving in the wind, a predicted future position of a tracked object is determined, based on radar and/or image information. Relatively accurate distance readings from the radar can be combined with relatively accurate two-dimensional projection location reading from the camera to yield a three-dimensional trajectory of the object. Laws of physics influencing the movement of the object can also be considered.

US 10989791 B2 discloses another system using cooperating radar and camera. After an object has been identified, a region of interest is determined for the radar and for the camera, respectively, and a search for the object is then limited to the region of interest in question. Based on the combined data from the radar and the camera, a three-dimensional trajectory of the object is constructed.

US 10754025 B2 discloses a system wherein a radar is used to detect the presence of an object, upon which detection a camera is trigged to capture a series of images of a region through which the object moves.

US 2020269089 A1 discloses a system wherein objects are tracked through space using radar, but in which the detection instead falls back to a camera in case the radar is unable to track the object.

US 9855481 B2 discloses a system arranged to measure a trajectory of an object using radar, and then to modify an image of a region through which the object moves to depict part of the trajectory for a user.

SE 2230331-7 A discloses a method for using digital image processing to detect blobs corresponding to a moving object in a series of images captured by a camera.

In many cases, such as when tracking moving sporting projectiles travelling at high velocities, for instance golf balls, baseballs or footballs, hardware resource limitations place a cap on the quality of resulting object tracking information.

For instance, there is generally a problem with false positives. Both the camera signal and the radar signal might be noisy, making it necessary to consider and disregard many potential blobs and trajectories. For both the camera and the radar, the information can be ambiguous in the sense that two or more different three-dimensional trajectories can be compatible with instantaneous readings.

Communication channels between various parts of a tracking system can have limited maximum throughput. This can be the case between entities such as a camera, a radar and one or more computers used to perform calculations in connection to tracking. Computing resources in such a system will be limited, as will memory resources used by such computing resources.

It is desirable to utilize available hardware resources to its full potential since this allows the quality of the output tracking information to be maximized.

**SUMMARY OF THE INVENTION**

The various embodiments described herein solve one or more of the above-described problems and provide techniques for tracking the paths of moving objects using less resources compared to conventional object tracking techniques.

Hence, the invention relates to a method for tracking an object moving through a three-dimensional space within a field of view of a digital camera, comprising:

obtaining from a radar directional information regarding the object in relation to the radar; obtaining from the digital camera a series of consecutively captured images representing optical input from the three-dimensional space;
transforming the directional information into image plane coordinates specific to the digital camera to determine a region of interest corresponding to a location in the consecutively captured images of the object;

for each of a plurality of pixels of the images, determining if the pixel is a blob candidate by determining if a current signal value for the pixel deviates from a baseline value for the pixel by more than a pixel signal noise threshold value;

combining individual ones of the plurality of pixels having been determined to be blob candidates into one or more blobs; and

correlating respective blobs in two or more different images of the series of consecutively captured images to determine a trajectory of the object through the three-dimensional space.

In some embodiments, the determining if individual ones of the plurality of pixels are blob candidates is performed based on the region of interest by the method comprising at least one of

performing the determining of if individual ones of the plurality of pixels are blob candidates only with respect to pixels of the plurality of pixels that are within the region of interest and not with respect to pixels of the plurality of pixels that are not within the region of interest; performing the determining of if individual ones of the plurality of pixels are blob candidates with respect to pixels of the plurality of pixels that are within the region of interest before pixels of the plurality of pixels that are outside of the region of interest; and

determining of respective pixel noise threshold values for individual ones of the plurality of pixels based on the region of interest so that pixel noise threshold values for pixels of the plurality of pixels that are within the region of interest are determined to be relatively lower than pixel noise threshold values for pixels of the plurality of pixels that are outside of the region of interest.

In some embodiments, the method further comprises obtaining from the radar updated directional information regarding the object in relation to the radar;

transforming the updated directional information into the image plane coordinates to determine an updated region of interest corresponding to a location in the consecutively captured images of the object; and

determining if individual pixels of the plurality of pixels are blob candidates based on the updated region of interest.

In some embodiments, the method further comprises obtaining from the radar radial distance and/or speed information regarding the object in relation to the radar;

calculating, based on the directional information and the radial distance and/or speed information, a three-dimensional radar-based trajectory of the object;

projecting the three-dimensional radar-based trajectory onto the image plane coordinates of the consecutively captured images to achieve a two-dimensional radar-based trajectory; and

determining the region of interest based on the two-dimensional radar-based trajectory.

In some embodiments, the method further comprises extrapolating, based on the directional information, a radar-based trajectory of the object to achieve an expected future location of the object; and

determining the region of interest based on the expected future location of the object.

In some embodiments, the method further comprises obtaining from the radar directional

information regarding two or more concurrent objects in relation to the radar; determining two or more concurrent regions of interest corresponding to the directional information; and

determining if individual pixels of the plurality of pixels are blob candidates based on each of the two or more concurrent regions of interest.

In some embodiments, the determining of if individual pixels of the plurality of pixels are blob candidates is performed until an available or allocated computing resource has been exhausted.

In some embodiments, the method further comprises determining a measurement of a confidence value of the directional information; and

determining the region of interest based on the confidence value.

In some embodiments, the confidence value is determined based on a signal-to-noise value of the radar.

In some embodiments, a distribution, across the image plane coordinates, of the region of interest is determined based on the confidence value.

In some embodiments, the method further comprises determining, for two or more of the consecutively captured images, a corresponding set of one or two or more of the respective blobs; and

correlating the determined set of one or more of the respective blobs to each other across the two or more of the consecutively captured images, to form a set of one or more hypothetical camera-based trajectories for one or more hypothetical objects.

In some embodiments, the method further comprises applying a physics model to determine credibility of the hypothetical camera-based trajectories; and disregarding one or more of the hypothetical camera-based trajectories based on the determined credibility.

In some embodiments, the physics model is a three-dimensional physics model.

In some embodiments, the hypothetical camera-based trajectories are hypothetical three-dimensional camera-based trajectories.

In some embodiments, the method further comprises obtaining from the radar, at two or more different points in time, radial distance and/or speed information as well as directional information regarding one or more hypothetical moving objects in relation to the radar to form hypothetical radar-based object information; and correlating the hypothetical radar-based object information across the two or more different points in time to form one or more hypothetical three-dimensional radar-based trajectories for the one or more hypothetical objects.

In some embodiments, the method further comprises applying a physics model to determine credibility of the hypothetical radar-based three-dimensional trajectories; and disregarding one or more of the hypothetical radar-based three-dimensional trajectories based on the determined credibility.

In some embodiments, the method further comprises correlating, with respect to time and a common coordinate system, the one or more hypothetical camera-based trajectories with the one or more hypothetical three-dimensional radar-based trajectories to achieve one or more hypothetical three-dimensional trajectories for one or more hypothetical objects; and determining a three-dimensional trajectory for the object as one of the hypothetical three-dimensional trajectories.

In some embodiments, the method further comprises obtaining from the radar one or more radial distances and/or radial speeds regarding one or more moving objects in relation to the radar;

determining a set of three-dimensional blobs by combining each of the respective blobs individually with two or more of, such as each of, the one or more radial distances and/or radial speeds, the set of three-dimensional blobs relating to the different images of the consecutively captured images; and correlating the set of three-dimensional blobs to form one or more hypothetical three-dimensional trajectories for one or more hypothetical objects; and determining a trajectory for the object as, or based on, one of the hypothetical three-dimensional trajectories.

In some embodiments, the method further comprises applying a physics model to determine credibility of the one or more hypothetical three-dimensional trajectories.

In some embodiments, the determining of the trajectory for the object as one of the one or more hypothetical three-dimensional trajectories is performed based on the applying of the physics model.

The invention also relates to a system for tracking an object moving through a three-dimensional space within a field of view of a digital camera, the system comprising:

a radar information analyzer configured to obtain, from a radar, directional information regarding the object in relation to the radar; and
a digital image analyzer configured to obtain, from the digital camera, a series of consecutively captured images representing optical input from the three-dimensional space.

In some embodiments, the system is further configured to

transform the directional information into image plane coordinates specific to the digital camera to determine a region of interest corresponding to a location in the consecutively captured images of the object;
for each of a plurality of pixels of the images, determine if the pixel is a blob candidate by determining if a current signal value for the pixel deviates from a baseline value for the pixel by more than a pixel signal noise threshold value;
combine two or more of the plurality of pixels having been determined to be blob candidates into one or more blobs; and
correlate the blobs in two or more different images of the series of consecutively captured images to determine a trajectory of the object through the three-dimensional space.

In some embodiments, the determining if individual ones of the plurality of pixels are blob candidates is performed based on the region of interest by the system being configured to perform at least one of

the determining of if individual ones of the plurality of pixels are blob candidates only with respect to pixels of the plurality of pixels that are within the region of interest and not with respect to pixels of the plurality of pixels that are not within the region of interest;
the determining of if individual ones of the plurality of pixels are blob candidates with respect to pixels of the plurality of pixels that are within the region of interest before pixels of the plurality of pixels that are outside of the region of interest; and
the determining of respective pixel noise threshold values for individual ones of the plurality of pixels based on the region of interest so that pixel noise threshold values for pixels of the plurality of pixels that are within the region of interest are determined to be relatively lower than pixel noise threshold values for pixels of the plurality of pixels that are outside of the region of interest.

The invention also relates to a computer program product for tracking an object moving through a three-dimensional space within a field of view of a digital camera, the computer program product configured to, when executing on one or more processors, perform operations comprising:

obtaining from a radar directional information regarding the object in relation to the radar;

obtaining from the digital camera a series of consecutively captured images representing optical input from the three-dimensional space;

transforming the directional information into image plane coordinates specific to the digital camera to determine a region of interest corresponding to a location in the consecutively captured images of the object;

for each of a plurality of pixels of the images, determining if the pixel is a blob candidate by determining if a current signal value for the pixel deviates from a baseline value for the pixel by more than a pixel signal noise threshold value;

combining two or more of the plurality of pixels having been determined to be blob candidates into one or more blobs; and

correlating the blobs in two or more different images of the series of consecutively captured images to determine a trajectory of the object through the three-dimensional space.

In some embodiments, the determining if individual ones of the plurality of pixels are blob candidates is performed based on the region of interest by the computer program being configured to, when executed on the one or more processors, perform at least one of

the determining of if individual ones of the plurality of pixels are blob candidates only with respect to pixels of the plurality of pixels that are within the region of interest and not with respect to pixels of the plurality of pixels that are not within the region of interest;

the determining of if individual ones of the plurality of pixels are blob candidates with respect to pixels of the plurality of pixels that are within the region of interest before pixels of the plurality of pixels that are outside of the region of interest; and

determining of respective pixel noise threshold values for individual ones of the plurality of pixels based on the region of interest so that pixel noise threshold values for pixels of the plurality of pixels that are within the region of interest are determined to be relatively lower than pixel noise threshold values for pixels of the plurality of pixels that are outside of the region of interest.

The invention also relates to a method for tracking an object moving through a three-dimensional space within a field of view of a digital camera, comprising:

obtaining from a radar directional information regarding one or more hypothetical moving objects moving through the three-dimensional space in relation to the radar, as well as radial distance and/or speed information regarding the one or more hypothetical moving objects in relation to the radar;

determining, based on the obtained information and without taking into consideration information from the digital camera, two or more hypothetical three-dimensional radar-based trajectories;

transforming each of the hypothetical three-dimensional radar-based trajectories in-to image plane coordinates specific to the digital camera to achieve a set of two or more hypothetical two-dimensional radar-based trajectories;

obtaining from the digital camera a series of consecutively captured images representing optical input from the three-dimensional space;

analyzing the series of consecutively captured images to detect a two-dimensional camera-based trajectory of the object through the field of view;

mapping, in the image plane coordinates, the two-dimensional camera-based trajectory to one of the hypothetical two-dimensional radar-based trajectories; and

determining a three-dimensional trajectory of the object through the three-dimensional space based on the two-dimensional camera-based trajectory in combination with radial distance and/or speed information associated with the mapped hypothetical two-dimensional radar-based trajectory, but without considering directional information associated with the mapped hypothetical two-dimensional radar-based trajectory.

In some embodiments, the method further comprises updating the two-dimensional camera-based trajectory based on additional captured images from the digital camera; and iteratively tracking the object by determining the three-dimensional trajectory of the object based on the updated two-dimensional camera-based trajectory and regarding the radial distance and/or speed information associated with the hypothetical two-dimensional radar-based trajectory, without considering updated information regarding the directional information associated with the hypothetical two-dimensional radar-based trajectory.

In some embodiments, the method further comprises identifying an inability to detect updated information regarding the two-dimensional camera-based trajectory;

as a result of the identifying of the inability and from a time of the identifying moving forward, iteratively tracking the object based on updated information from the radar, the iterative tracking comprising:

receiving from the radar updated radial distance and/or speed information, and also updated directional information; and

updating the three-dimensional trajectory of the object based on the up-dated information.

In some embodiments, the method further comprises identifying a renewed ability to detect updated information regarding the two-dimensional camera-based trajectory; and as a result of the identifying of the renewed ability and from a time of the identifying moving forward, again iteratively tracking the object by determining the three-dimensional trajectory of the object based on updated information regarding the two-dimensional camera-based trajectory and regarding the radial distance and/or speed information associated with the hypothetical two-dimensional radar-based trajectory, without considering updated information regarding the directional information associated with the hypothetical two-dimensional radar-based trajectory.

The invention also relates to a method for tracking an object moving through a three-dimensional space within a field of view of a digital camera, comprising:

obtaining from a radar directional information regarding one or more hypothetical moving objects moving through the three-dimensional space in relation to the radar, as well as radial distance and/or speed information regarding the one or more hypothetical moving objects in relation to the radar;

determining, based on the obtained information and without taking into consideration information from the digital camera, two or more hypothetical three-dimensional radar-based trajectories;

transforming each of the hypothetical three-dimensional radar-based trajectories in-to image plane coordinates specific to the digital camera to determine a set of regions of interest each corresponding to a location in the consecutively captured images of a respective one of the one or more hypothetical moving objects;

obtaining from the digital camera a series of consecutively captured images representing optical input from the three-dimensional space;

analyzing the series of consecutively captured images to detect, only in the set of regions of interest, at least one blob;

mapping, in the image plane coordinates, the blob to one of the hypothetical three-dimensional radar-based trajectories; and

determining a three-dimensional trajectory of the object through the three-dimensional space based on the image location of the blob in combination with the radial distance and/or speed information associated with the one hypothetical three-dimensional radar-based trajectory, but without considering directional information associated with the one hypothetical three-dimensional radar-based trajectory.

In some embodiments, the method further comprises without considering information from the digital camera, and before the operation of transforming, adjusting or filtering out at least one of the two or more hypothetical three-dimensional radar-based trajectories based on a physics model of the corresponding hypothetical object travelling through the three-dimensional space.

In some embodiments, the method further comprises identifying an inability to map a two-dimensional camera-based trajectory or blob detected in the consecutively captured series of consecutively captured images to any one of the hypothetical radar-based trajectories; and

as a result of the identifying of the inability, determining the three-dimensional trajectory of the object without taking into consideration updated information from the radar.

In some embodiments, the method further comprises storing in a memory not all of the series of consecutively captured images, but a most recent set of the series of consecutively captured images;

transforming at least one of the hypothetical three-dimensional radar-based trajectories into the image plane coordinates to determine a region of interest corresponding to a location in the stored consecutively captured images; and

identifying a two-dimensional camera-based trajectory of the object in connection to the region of interest and across the stored series of consecutively captured images.

In some embodiments, the storing of the series of consecutively captured images in memory comprises storing the series of consecutively captured images in a circular buffer;

In some embodiments, the method further comprises determining, for two or more of the consecutively captured images, a set of one or more blobs;

correlating the set of one or more blobs to each other across the two or more of the consecutively captured images, to form a set of one or more hypothetical camera-based trajectories for one or more hypothetical objects; and

determining the three-dimensional trajectory of the object based on one of the one or more hypothetical camera-based trajectories.

In some embodiments, the method further comprises applying a physics model to determine credibility of the hypothetical camera-based trajectories; and adjusting or filtering out one or more of the hypothetical camera-based trajectories based on the determined credibility.

In some embodiments, the physics model is a three-dimensional physics model.

In some embodiments, the method further comprises, the hypothetical camera-based trajectories are hypothetical three-dimensional camera-based trajectories.

In some embodiments, the method further comprises obtaining from the radar, at two or more different points in time, directional information regarding the one or more hypothetical objects moving through the three-dimensional space in relation to the radar, as well as radial distance and/or speed information regarding the one or more hypothetical moving objects in relation to the radar, to form hypothetical radar-based object information; and

correlating the hypothetical radar-based object information across the two or more different points in time to form the two or more hypothetical three-dimensional radar-based trajectories.

In some embodiments, the method further comprises applying a physics model to determine credibility of the one or more hypothetical three-dimensional radar-based trajectories; and

adjusting or filtering out one or more of the hypothetical three-dimensional radar-based trajectories based on the determined credibility.

The invention also relates to a system for tracking an object moving through a three-dimensional space within a field of view of a digital camera, the system comprising

a radar information analyzer configured to obtain, from a radar, directional information regarding one or more hypothetical moving objects moving through the three-dimensional space in relation to the radar, as well as radial distance and/or speed information regarding the one or more hypothetical moving objects in relation to the radar; and

a digital image analyzer configured to obtain, from the digital camera, a series of consecutively captured images representing optical input from the three-dimensional space.

In some embodiments, the system being configured to

determine, based on the obtained information and without taking into consideration information from the digital camera, two or more hypothetical three-dimensional radar-based trajectories;

transform each of the hypothetical three-dimensional radar-based trajectories into image plane coordinates specific to the digital camera to achieve a set of two or more hypothetical two-dimensional radar-based trajectories;

analyze the series of consecutively captured images to detect a two-dimensional camera-based trajectory of the object through the field of view;

map, in the image plane coordinates, the two-dimensional camera-based trajectory to one of the hypothetical two-dimensional radar-based trajectories; and

determine a three-dimensional trajectory of the object through the three-dimensional space based on the two-dimensional camera-based trajectory in combination with radial distance and/or speed information associated with the mapped hypothetical two-dimensional radar-based trajectory, but without considering directional information associated with the mapped hypothetical two-dimensional radar-based trajectory.

The invention also relates to a computer program product for tracking an object moving through a three-dimensional space within a field of view of a digital camera, the computer program product configured to, when executing on one or more processors, perform operations comprising:

obtaining from a radar directional information regarding one or more hypothetical moving objects moving through the three-dimensional space in relation to the radar, as well as radial distance and/or speed information regarding the one or more hypothetical moving objects in relation to the radar;

determining, based on the obtained information and without taking into consideration information from the digital camera, two or more hypothetical three-dimensional radar-based trajectories;

transforming each of the hypothetical three-dimensional radar-based trajectories in-to image plane coordinates specific to the digital camera to achieve a set of two or more hypothetical two-dimensional radar-based trajectories;

obtaining from the digital camera a series of consecutively captured images representing optical input from the three-dimensional space;

analyzing the series of consecutively captured images to detect a two-dimensional camera-based trajectory of the object through the field of view;

mapping, in the image plane coordinates, the two-dimensional camera-based trajectory to one of the hypothetical two-dimensional radar-based trajectories; and

determining a three-dimensional trajectory of the object through the three-dimensional space based on the two-dimensional camera-based trajectory in combination with radial distance and/or speed information associated with the mapped hypothetical two-dimensional radar-based trajectory, but without considering directional information associated with the mapped hypothetical two-dimensional radar-based trajectory.

The invention also relates to a method for tracking an object moving through a three-dimensional space within a field of view of a digital camera, comprising:

obtaining from a radar directional information regarding one or more hypothetical moving objects moving through the three-dimensional space in relation to the radar;

determining, based on the obtained information, one or more hypothetical radar-based trajectories;

obtaining from the digital camera a series of consecutively captured images representing optical input from the three-dimensional space;

analyzing the series of consecutively captured images to identify one or sever-al hypothetical camera-based trajectories of the one or more hypothetical objects through the field of view;

correlating the one or more hypothetical camera-based trajectories to the one or more hypothetical radar-based trajectories;

determining one or more hypothetical three-dimensional trajectories of the hypothetical objects based on respective pairs of one of the one or more hypothetical camera-based trajectories in combination with one of the one or more hypothetical radar-based trajectories; and

determining a three-dimensional trajectory of the object through the three-dimensional space as one of the one or more hypothetical three-dimensional trajectories.

In some embodiments, the method further comprises feeding back information relating to the three-dimensional trajectory to the operation of analyzing the series of consecutively captured images to alter the results of the analyzing in subsequent operations.

In some embodiments, the one or more hypothetical radar-based trajectories are two-dimensional or three-dimensional trajectories.

In some embodiments, the one or more hypothetical camera-based trajectories are two-dimensional trajectories.

In some embodiments, the method further comprises transforming the one or more two-dimensional radar-based trajectories into the image plane coordinates specific to the camera or into a common coordinate system in which the hypothetical camera-based trajectories are also represented.

In some embodiments, the method further comprises obtaining from the radar, in addition to the directional information, radial distance and/or speed information regarding the one or more hypothetical moving objects in relation to the radar;

determining, based on the obtained information, one or more hypothetical three-dimensional radar-based trajectories; and

transforming each of the one or more three-dimensional radar-based trajectories into image plane coordinates specific to the digital camera to achieve the one or more hypothetical two-dimensional radar-based trajectories each as a hypothetical two-dimensional radar-based trajectory corresponding to a respective one of the one or more hypothetical three-dimensional radar-based trajectories.

In some embodiments, the method further comprises before the operation of feeding back, adjusting the three-dimensional trajectory based on a physics model of the object travelling through the three-dimensional space.

In some embodiments, the operation of analyzing comprises concurrently keeping track of two or more hypothetical two-dimensional camera-based trajectories of the object through the field of view.

In some embodiments, the operation of feeding back comprises using the information relating to the three-dimensional radar-based trajectory to determine one of the more hypothetical two-dimensional camera-based trajectories.

In some embodiments, the method further comprises updating the one of the more hypothetical two-dimensional camera-based trajectories over time based on updated fed back information relating to the three-dimensional trajectory.

In some embodiments, the operation of analyzing comprises

determining, for two or more of the consecutively captured images, a corresponding set of one or more of the blobs; and

correlating the determined set of one or more of the blobs to each other across the two or more of the consecutively captured images, to form the set of one or more hypothetical camera-based trajectories for the one or more hypothetical objects.

In some embodiments, the method further comprises applying a physics model to determine credibility of the hypothetical camera-based trajectories; and disregarding one or more of the hypothetical camera-based trajectories based on the determined credibility.

In some embodiments, the physics model is a three-dimensional physics model.

In some embodiments, the hypothetical camera-based trajectories are hypothetical three-dimensional camera-based trajectories.

In some embodiments, the method further comprises obtaining from the radar, at two or more different points in time, radial distance and/or speed information as well as directional information regarding the one or more hypothetical moving objects in relation to the radar to form hypothetical radar-based object information; and correlating the hypothetical radar-based object information across the two or more different points in time to form, directly or by first determining corresponding one or more hypothetical three-dimensional radar-based trajectories, the one or more hypothetical two-dimensional radar-based trajectories for the one or more hypothetical objects.

In some embodiments, the method further comprises applying a physics model to determine credibility of the one or more hypothetical two-dimensional radar-based trajectories and/or of the one or more hypothetical three-dimensional radar-based trajectories; and disregarding one or more of the of the one or more hypothetical two-dimensional radar-based trajectories and/or of the one or more hypothetical three-dimensional radar-based trajectories based on the determined credibility.

The invention also relates to a system for tracking an object moving through a three-dimensional space within a field of view of a digital camera, the system comprising a radar information analyzer configured to obtain, from a radar, directional information regarding one or more hypothetical moving objects moving through the three-dimensional space in relation to the radar; and

a digital image analyzer configured to obtain, from the digital camera, a series of consecutively captured images representing optical input from the three-dimensional space,
the system being configured to
determine, based on the obtained information, one or more hypothetical radar-based trajectories;
analyze the series of consecutively captured images to identify one or more hypothetical camera-based trajectories of the one or more hypothetical objects through the field of view; correlate the one or more hypothetical camera-based trajectories to the one or more hypothetical radar-based trajectories;
determine one or more hypothetical three-dimensional trajectories of the hypothetical objects based on respective pairs of one of the one or more hypothetical camera-based trajectories in combination with one of the one or more hypothetical radar-based trajectories; and
determine a three-dimensional trajectory of the object through the three-dimensional space as one of the one or more hypothetical three-dimensional trajectories.

In some embodiments, the system is further configured to feedback information relating to the three-dimensional trajectory to the analyzing the series of consecutively captured images to alter the results of subsequent analyzing.

The invention also relates to a computer software product for tracking an object moving through a three-dimensional space within a field of view of a digital camera, the computer program product configured to, when executing on one or more processors, perform operations comprising:

obtaining from a radar directional information regarding one or more hypothetical moving objects moving through the three-dimensional space in relation to the radar;
determining, based on the obtained information, one or more hypothetical radar-based trajectories;
obtaining from the digital camera a series of consecutively captured images representing optical input from the three-dimensional space;
analyzing the series of consecutively captured images to identify one or sever-al hypothetical camera-based trajectories of the one or more hypothetical objects through the field of view;
correlating the one or more hypothetical camera-based trajectories to the one or more hypothetical radar-based trajectories;
determining one or more hypothetical three-dimensional trajectories of the hypothetical objects based on respective pairs of one of the one or more hypothetical camera-based trajectories in combination with one of the one or more hypothetical radar-based trajectories; and
determining a three-dimensional trajectory of the object through the three-dimensional space as one of the one or more hypothetical three-dimensional trajectories.

In some embodiments, the computer software product is further configured to, when executing on the one or more processors, feedback information relating to the three-dimensional trajectory to the operation of analyzing the series of consecutively captured images to alter the results of the analyzing in subsequent operations.

Said computer software products can each individually be implemented by a non-transitory computer-readable medium encoding instructions that cause one or more hardware processors located in at least one of computer hardware devices in any one of the systems to perform the object tracking.

**BRIEF DESCRIPTION OF THE DRAWINGS**

In the following, the invention will be described in detail, with reference to exemplifying embodiments of the invention and to the enclosed drawings, wherein:

Figure 1 is an overview of a system 100 configured to perform a method of the type illustrated in Figures 2a-2d;
Figures 2a-2d show respective flowcharts for logically tracking moving target objects;
Figure 3 is a simplified illustration of a data processing apparatus;
Figure 4 shows an exemplary captured image in the form of a pixmap corresponding to an image plane of an image-capturing camera;
Figure 5 shows radar information;
Figures 6a and 6b illustrate a relationship between a radar and a camera; and
Figure 7 illustrates various trajectories and regions of interest for objects moving through a three-dimensional space.

All figures share the same reference numerals for same and corresponding parts.

**DETAILED DESCRIPTION**

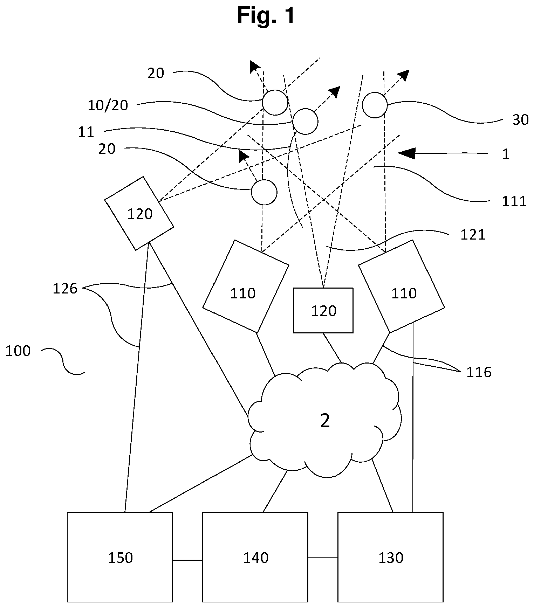

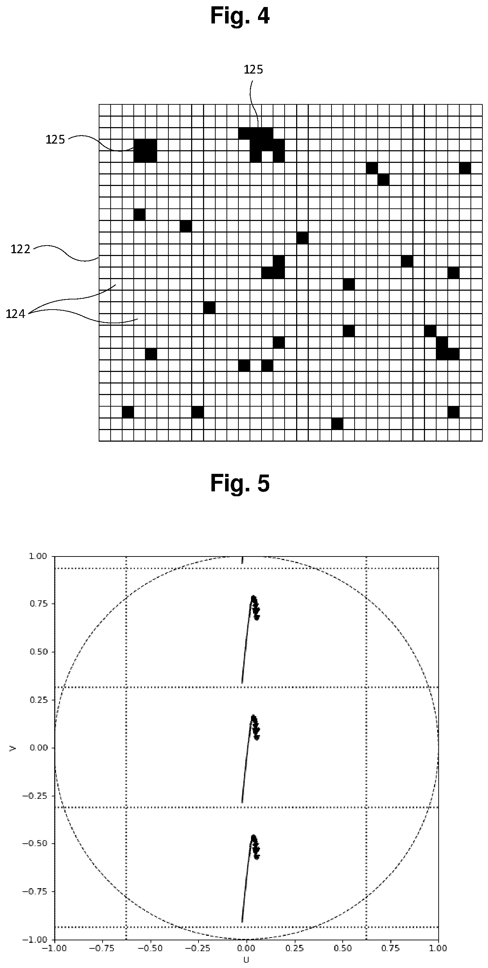

With reference to Figures 1 and 4, the method relates to a method for tracking objects 20 moving through a three-dimensional space 1. Generally, a system 100 can comprise one or more digital cameras 110, each being configured to represent optical input from the three-dimensional space 1 within a field of view 111 of the digital camera 110, to produce digital images 122 of such objects 20, the objects 20 travelling through the space 1 hence being represented by the digital camera 110 in consecutively captured digital images 122. Such representation by the digital camera 110 will herein be denoted a "depiction", for brevity.

In Figure 1, 20 denotes various objects that simultaneously travel through the three-dimensional space 1. One of these objects, denoted 10, is a particular object to be tracked. It is realized that the presently described systems, methods and computer program products can be used to track one object 10 at a time as well as two or more objects 20 concurrently.

In some embodiments, the digital camera 110 is arranged not to move in relation to the space 1 during production of the series of digital images 122. For instance, the digital camera 110 may be fixed in relation to said space 1, or, in case it is movable it is kept still during the production of the series of digital images. Hence, the same part of the space 1 is then depicted each time by the digital camera 110, and the digital camera 110 is configured to produce digital images 122 having a corresponding set of pixels 124 and so that said produced digital images 122 comprise corresponding pixel values.

That the pixel values of two or more different images 122 "correspond" to each other means that individual pixels 124 measure light entering the camera 110 from the same, or substantially the same, light cone in all of the images 122 in question. It is realized that the camera 110 may move slightly, due to wind, thermal expansion and so forth, between images 122, but that there is substantial correspondence between pixels 124 even in cases where such noise-inducing slight movement is present. In various embodiments, there can be at least 50% overlap between light cones of any one same pixel 124 of the camera 110 between any two consecutive images 122.

In other embodiments, the camera 110 is movable, such as pivotable. In such cases an image transformation can be applied to a captured image 122 so as to bring its pixels 124 into correspondence with pixels of a previous or future captured image. Such transformation can also be applied to parts of captured images 122 and involve size transformations. After such transformation, the method described herein is performed in the corresponding manner.

In case the system 100 comprises more than one digital camera 110, two or more such digital cameras 110 can be configured to depict one and the same part of the three-dimensional space 1 and consequently track the same moving target object(s) 20 through said space 1. In such cases, the two or more digital cameras 110 can be used to construct a stereoscopic view of the respective tracked path of each target object 20.

As mentioned, the digital camera 110 is configured to produce a series of consecutive images 122, at different points in time. Such images may also be denoted image "frames". In some embodiments, the digital camera 110 is a digital video camera, configured to produce a digital moving film comprising or being constituted by such consecutive digital image frames. Image 122 information 116 is sent from each camera 110 to one or several entities 130, 140, 150.

The system 100 can furthermore comprise one or more radars 120, each being configured to represent the three-dimensional space 1 within a field of view 121 of the radar 120, to produce directional, radial distance and/or radial speed information 126 for the objects 20. Hence, the same objects 20 travelling through the space 1 and being depicted by the one or more digital cameras 110 are also observed by the one or more radars 120. In case there are two or more radars 120 their respective field of view 121 can be overlapping, or the respective field of view 121 of the different radars 120 can cover separate parts of the three-dimensional space. Each radar 120 can represent a part of the three-dimensional space 1 that individually overlaps with a part of the three-dimensional space 1 depicted by each camera 110.

As used here, the term "speed" does not incorporate or imply any direction for the speed. However, since the radar 120 typically measures the speed of an object in a direction which is in a radial direction in relation to the radar 120, the term "radial speed" is used throughout for the measured speed, which is then in fact a radial velocity since the measured speed is the speed or speed component in the radial direction.

All description herein regarding "the camera" or "a camera" can correspondingly apply to each of the cameras 110 individually, and correspondingly for the radars 120.

Each of the one or more radars 120 can be a doppler radar, such as a directional doppler radar 120. One example of a suitable type of radar 120 is described in SE 2230046-1 A. Generally, each radar 120 can individually be configured to measure, via emitted electromagnetic radiation and measurement of corresponding electromagnetic radiation reflected from one or more of the objects 20, a radial distance and/or radial speed of the one or more objects 20 in question in relation to the radar 120 in question, and/or an angular direction of the one or more objects 20 in question in relation to the radar 120 in question.

Similarly to the camera 110, the radar 120 can be arranged not to move in relation to the space 1 during production of the radar observations. For instance, the radar 120 may be fixed in relation to said space 1, or, in case it is movable it can be kept still during the production of the series of digital images. Hence, in such embodiments the same part of the space 1 is observed each time by the radar 120, and the radar 120 is configured to, over time, produce the directional, distance and/or speed information in a coordinate system being fixed in relationship to the space 1.

There may also be cases where the radar 120 is movable, such as pivotable. In such cases a coordinate system transformation can be applied to the observed radar information so as to bring the observed information into correspondence with previous or future corresponding information observed by the same radar 120, in a way that may correspond to what has been described with respect to the camera(s) 110 above.

Both the radar 120 and the camera 110 individually, or together, can be associated with a gyroscope, an accelerometer, and/or similar measurement sensor to keep track of a current orientation of the radar 120 and/or the camera 110. Such measurement sensor can be used to continuously correct the captured image and observed radar information in terms of rotary and/or translatory movements of the radar 120 and/or the camera 110 over time, using suitably selected transformation matrices. The radar 120 and the camera 110 can be collocated, such as in a combined radar-camera device, in a way so that a relative geometric relationship between the radar 120 and the camera 110 is known.

The system 100 can be configured to transform a respective coordinate system used by each radar 120 and each camera 110 into a common coordinate system. This can include, for instance, three-dimensional coordinate system transformations from one radar/camera to the common coordinate system based on a known geometric relationship between the different units, and any additional required information such as a known focal length of a camera 110 used to depict the space. Transformations can also include projections, such as projecting a three-dimensional location in the coordinate system of a radar 120 onto a two-dimensional image plane of a camera 110, to achieve a two-dimensional coordinate position in a field of view 111 of such camera. It is realized that such coordinate system transformations are well-known per se, and will not be described in detail herein. The common coordinate system can be a coordinate system of a camera 110, a coordinate system of a radar 120 or a different coordinate system.

In some embodiments, one or more radars 120 are fixedly installed in relation to one or more cameras 110, in particular a pair of one radar 120 and one camera 100 can be fixedly installed in relation to each other. Even in case of an aggregate comprising such radar 120 and such camera 110 as a whole is possibly movable, the geometric relationship between the radar 120 and the camera 110 will then be fixed, and a coordinate system of one of these devices can be readily transformed into a coordinate system of another one of these devices, and vice versa, using a known geometric relationship between the two.

Also, each of the one or more cameras 110 can be associated with a respective fixed or variable frame rate, and may or may not be synchronized with each other. In other words, each image 122 from respective cameras 110 can be captured at the same or different points in time. Similarly, the measurement data from each of the one or more radars 120 may or may not be time-synchronized across different radars 120 and/or with each of the one or more cameras 110. In order for the measurement data from the camera(s) 110 and the radar(s) 120 to be synchronized so as to yield a common view of the object(s) 20 moving through the space 1 over time, various methods can be employed. For instance, measurements from different points in time can be interpolated to achieve synthetic measurements between such points in time; or an observed trajectory can be determined based on two or more consecutive measurements from one or more of such cameras 110 and/or radars 120, whereupon the determined trajectory can be used to calculate an expected location of each object 20 at points in time before, between or after a certain measurement was made. Such techniques are also known per se, and will not be described in detail herein.

In some embodiments, two or more of the one or more cameras 110 and/or the one or more radars 120 can be time-synchronized so as to produce respective measurements at the same points in time.

In some embodiments of the invention, exactly one digital camera 110 is used together with exactly one radar 120 to track the object 10 based on information captured using the one camera 110 and the one radar 120. In case the system 100 then comprises more than one camera 110 and/or more than one radar 120, each pair of one camera 110 together with one radar 120 can then perform a separate tracking of the same or different moving objects 20, for instance by observing different parts of the three-dimensional space 1.

As is illustrated in Figure 1, the system 100 further comprises a digital image analyzer 130, configured to analyze digital images received directly from the digital camera 110, or received from the digital camera 110 via an intermediate system, in same or processed (re-formatted, compressed, filtered, time-synchronized, interpolated, transformed, etc.) form. The analysis performed by the digital image analyzer 130 can take place entirely in the digital domain.

The system 100 also comprises a radar information analyzer 150, configured to analyze radar 120 observations (radar information) received directly from the radar 120, or received from the radar 120 via an intermediate system, in same or processed (re-formatted, compressed, filtered, time-synchronized, interpolated, transformed, etc.) form. The analysis performed by the radar information analyzer 150 can also take place entirely in the digital domain.

The system 100 further comprises an object tracker 140, configured to track the moving objects 10 across two or more of said digital images, based on information provided from the digital image analyzer

21    EP 4 715 427 A1    22

130 and the radar information analyzer 150. The analysis performed by the object tracker 140 can also take place entirely in the digital domain.

In example embodiments, the system 100 is configured to track objects 20 in the form of sports objects in flight, such as balls in flight, for instance baseballs or golf balls in flight. In some embodiments, the system 100 is used at a golf practice range, such as a driving range having a plurality of bays for hitting golf balls that are to be tracked using the system 100. In other cases, the system 100 can be installed at an individual golf range bay, or at a golf tee, and configured to track golf balls being struck from said bay or tee. The system 100 can also be a portable system 100, configured to be positioned at a location from which it can track said moving objects 10. For instance, the system 100 can be used to track a golf ball shot by a player from an arbitrary location on a golf course, such as from a fairway, from a bunker trap or from rough. It is realized that the monitored "space" 1 mentioned above will, in each of these and other cases, will be a three-dimensional space 1 through which sport balls are expected to move.

Various types of computers can be used in the system 100. The digital image analyzer 130, the radar information analyzer 150 and the object tracker 140 constitute examples of such computers. In some cases, the digital image analyzer 130, the radar information analyzer 150 and the object tracker 140 can be provided as software functions executing on one and the same computer, but in other cases one, each or some of these entities 130, 140, 150 can be individually or collectively provided as separate software and/or hardware entities. Each or some of the entities 130, 140, 150 can also individually be divided into two or more separate cooperating units. The one or more digital cameras 110 can also be configured to perform digital image processing, and then also constitute examples of such computers. In some embodiments, the digital image analyzer 130 and/or the object tracker 140 can be implemented as software functions configured to execute at least partly on hardware of one or more digital cameras 110; and/or the radar information analyzer 150 and/or the object tracker 140 can be implemented as software functions configured to execute at least partly on hardware of one or more radars 120. In some embodiments, the digital image analyzer 130 and/or the radar information analyzer and/or the object tracker 140 is or are implemented on standalone or combined hardware platforms, such as on one or more computer servers.

Each camera 110 may have or be associated with its own digital image analyzer 130, and/or each radar 120 may have or be associated with its own radar information analyzer 150, and/or two or more, or all, cameras 110 can share one and the same digital image analyzer 130, and/or each or all radars 120 can share one and the same radar information analyzer 150. Everything that is said herein in relation to "the digital image analyzer 130" and "the radar information analyzer 150" is equally applicable to each of potentially two or more such digital image analyzers 130 and to each of potentially two or more such radar information analyzers 150, respectively.

The one or more digital cameras 110, the one or more radars 120, the digital image analyzer 130, the radar information analyzer 150 and the object tracker 140 are configured to communicate digitally, either via computer-internal communication paths, such as via a computer bus, or via computer-external wired and/or wireless communication paths, such as via internet network 2 (e.g., the Internet). In implementations that need substantial communications bandwidth, the camera(s) 110 and the digital image analyzer 130 can communicate via a direct, wired digital communication route, which can be, but does not have to be, over the network 2. Correspondingly, the radar(s) 120 and the radar information analyzer 150 can communicate via such a direct, wired digital communications route that in some cases is not the network 2. On the other hand, the digital image analyzer 130, the radar information analyzer 150 and the object tracker 140 can communicate with each other over the network 2 (e.g., a conventional Internet connection).

The essential elements of a computer, in general, are a processor for performing instructions and one or more memory devices for storing instructions and data. As used herein, a "computer" can include a server computer, a client computer, a personal computer, embedded programmable circuitry, or a special purpose logic circuitry. Such computers can be connected to one or more other computers through a network, such as the internet 2, or via any suitable peer-to-peer connection for digital communications, such as a Bluetooth® connection.

Each computer can include various software modules, which can be distributed between an applications layer and an operating system. These can include executable and/or interpretable software programs or libraries, including various programs that operate, for instance, as the digital image analyzer 130 program, the radar information analyzer 150 program and/or the object tracker 140 program. Other examples include a digital image preprocessing and/or compressing and/or transforming program and a digital radar information preprocessing and/or transforming program. The number of software modules used can vary from one implementation to another and from one such computer to another. Each of said programs can be implemented in embedded firmware and/or as software modules that are distributed on one or more data processing apparatus connected by one or more computer networks or other suitable communication networks.

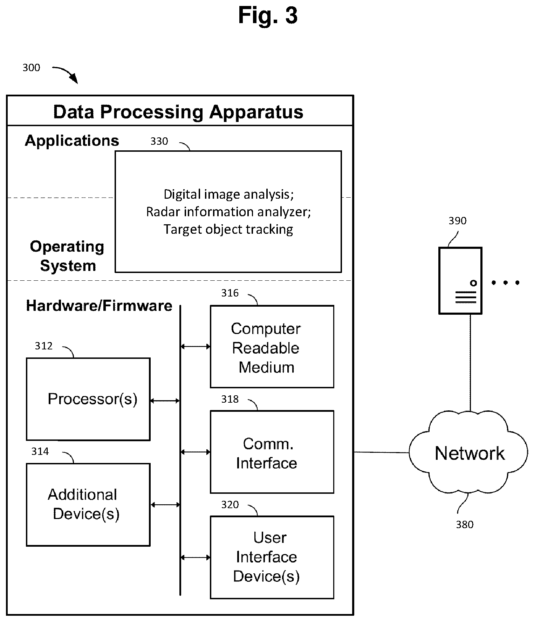

Figure 3 illustrates an example of such a computer, being a data processing apparatus 300 that can include hardware or firmware devices including one or more hardware processors 312, one or more additional devices 314, a non-transitory computer readable medium 316, a communication interface 318, and one or more user interface devices 320. The processor 312 is capable

12

of processing instructions for execution within the data processing apparatus 300, such as instructions stored on the non-transitory computer readable medium 316, which can include a storage device such as one of the additional devices 314. In some implementations, the processor 312 is a single or multi-core processor, or two or more central processing units (CPUs). The data processing apparatus 300 uses its communication interface 318 to communicate with one or more other computers 390, for example, over the network 380. Thus, in various implementations, the processes described can be run in parallel, concurrently, or serially, on a single or multi-core computing machine, and/or on a computer cluster/cloud, etc.

The data processing apparatus 300 includes various software modules, which can be distributed between an applications layer and an operating system. These can include executable and/or interpretable software programs or libraries, including a program 330 that constitutes the digital image analyzer 130 described herein, configured to perform the method operations performed by such digital image analyzer 130. The program 330 can also constitute the radar information analyzer 150 described herein, configured to perform the method operations performed by such radar information analyzer 150. The program 330 can also constitute the object tracker 140 described herein, configured to perform the method operations performed by such object tracker 140.

Examples of user interface devices 320 include a display, a touchscreen display, a speaker, a microphone, a tactile feedback device, a keyboard, and a mouse. Moreover, the user interface device(s) need not be local device(s) 320, but can be remote from the data processing apparatus 300, e.g., user interface device(s) 390 accessible via one or more communication network(s) 380. The user interface device 320 can also be in the form of a standalone device having a screen, such as a conventional smartphone being connected to the system 100 via a configuration or setup operation. The data processing apparatus 300 can store instructions that implement operations as described in this document, for example, on the non-transitory computer readable medium 316, which can include one or more additional devices 314, for example, one or more of a floppy disk device, a hard disk device, an optical disk device, a tape device, and a solid state memory device (e.g., a RAM drive, a Flash memory or an EEPROM). Moreover, the instructions that implement the operations described in this document can be downloaded to the non-transitory computer readable medium 316 over the network 380 from one or more computers 390 (e.g., from the cloud), and in some implementations, the RAM drive is a volatile memory device to which the instructions are downloaded each time the computer is turned on.

It is realized that the described computer hardware can be physical hardware or pysical hardware configured to emulate different computer hardware thus providing virtual hardware, or any combination thereof.

As mentioned, the system 100 is configured to perform a method according to one or more embodiments for tracking moving objects 20.

The present invention can furthermore be embodied as a computer software product, configured to perform said method when executing on computer hardware of the type described herein. The computer software product can hence be deployed as a part of the system 100 so as to provide the functionality required to perform the present method.

Both said system 100 and said computer software product are hence configured to track moving objects 20 moving through the space 1 in relation to the one or more digital cameras 110 and the one or more radars 120, by comprising or embodying the above-mentioned digital image analyzer 130, radar information analyzer 150 and object tracker 140, in turn being configured to perform the corresponding method operations described herein.

In general, everything that is said in relation to the presently described method is equally applicable to the system 100 and to the computer software product described herein, and vice versa. Further generally, all the functionality described herein, unless otherwise stated, can be performed automatically, electronically and in the digital domain, using software and/or hardware of the type described herein.

In computer vision, "image segmentation" is the process of separating an image into different regions, representing target objects within it. Generally, it is desirable to distinguish potential moving target objects from a background. The background may in general be changing and noisy, and is in many cases quite unpredictable. In the example of a golf ball being the tracked object 10, for instance, when such a ball is far away from the digital camera 110 depicting the ball 10, it may even be as small as one single pixel 124 in the digital image frame produced by the digital camera 110.

For these reasons, it is in general not possible to separate out a foreground object 10 from a background based only on a detected shape in relation to an expected shape of the target object 10. Instead, a statistical model can be set up of the background (sometimes denoted a "noise model"), and to identify pixels 124 that by a probability measure deviate from an expected value by more than a threshold value, based on this model. Adjacent pixels 124 in the detected digital image that deviate from the expected value in accordance with the noise model can then be grouped together into a "blob" 125 of pixels 124 (this is sometimes called "blob aggregation"). Such blobs 125 of pixels 124 can then be correlated across two or more consecutively captured images from one and the same camera 110 to form a trace or trajectory of the object 10 through the field of view 111 of the camera 110, such as a two-dimensional trajectory across the image plane coordinates of the camera 110.

One suitable process for analyzing the pixel 124 information over time to produce such blobs 125 of pixels 124 potentially representing one or more objects 10, 20 is described in SE 2230331-7 A.

One problem with such blob 125 detection is that it gives rise to false positives, for instance in the form of non-object movement such as tree leaves moving in the wind. Therefore, the digital image analyzer 130 will typically produce false positive trajectories, and without further analysis it is not possible to discriminate which ones of a set of detected hypothetical objects 30 actually correspond to one or more of a set of actual objects 20.

It is understood that, in general, the system 100 will be configured to track two or more objects 20 concurrently, of which the one described herein as the "tracked object" 10 is one. The system 100 will detect one or more "hypothetical objects" 30, that can be or comprise as a subset one or more of the two or more objects 20 moving through the three-dimensional space 1. Hence, a "hypothetical object 30", as the term is used herein, denotes a possible object as detected using available measurement data, whereas an "object 20" denotes an actual object moving through the three-dimensional space 1.

As used herein, the term "camera-based trajectory" denotes a trajectory as determined by the digital image analyzer 130 based on consecutively captured images 122 from a digital camera 110, or from one or more of the digital cameras 110. Such a camera-based trajectory can be a two-dimensional camera-based trajectory, being defined in terms of the two-dimensional image plane of a camera 110, or equivalently in a different two-dimensional coordinate system into which the camera detections are transformed. The camera-based trajectory can alternatively be a three-dimensional camera-based trajectory, being defined in terms of a three-dimensional coordinate system, for instance a coordinate system corresponding to the three-dimensional space 1. In some cases, such a three-dimensional camera-based trajectory can be determined based on the two-dimensional measurement data from the camera 110 together with corresponding radial distance and/or radial speed information from the radar 120 and/or based on best-effort estimations of a three-dimensional trajectory corresponding to the two-dimensional trajectory observed by the camera 110 and/or a stereoscopically determined three-dimensional trajectory based on concurrent images captured by two or more cameras 110 depicting the same object 10. In some circumstances, it may also, or alternatively, be possible for the camera 110 to determine an approximate radial distance to the object 10 based on a size of a determined blob 125, in which case such determined approximate radial distance can be used to form a three-dimensional camera-based trajectory.

As used herein, irrespectively of if the camera-based trajectory is a two-dimensional trajectory or a three-dimensional trajectory, a "hypothetical" camera-based trajectory refers to a trajectory determined based on pixel 124 measurement data from the camera 110 but which has not yet been confirmed to actually correspond to an actual object 20 moving through the three-dimensional space 1. In general, the digital image analyzer 130 will keep track of many different hypothetical camera-based trajectories concurrently, and continuously or intermittently purge individual ones of such hypothetical camera-based trajectories that do not fulfill certain criteria as will be described hereinbelow, while adding new hypothetical camera-based trajectories that accrue from the consecutively captured images 122 from the camera 110 over time.

Correspondingly, the measurement information from the radar 120 will give rise, in the radar information analyzer 150, to hypothetical radar-based trajectories, that are one-dimensional, two-dimensional or three-dimensional possible trajectories of hypothetical objects 30, such trajectories still not being confirmed as corresponding to actual moving objects 20.

A hypothetical one-dimensional radar-based trajectory can accrue based on radial distance and/or radial speed information from the radar 120 over time, describing how a corresponding hypothetical object 30 moves in the radial direction in relation to the radar 120 over time.

A hypothetical two-dimensional radar-based trajectory can accrue based on directional information, in two orthogonal directions, from the radar 120 over time, describing how the hypothetical object 30 moves across a view plane of the radar 120, such as described in terms of two different angles (e.g. yaw and pitch) or a height/width dimension pair. Such two-dimensional hypothetical radar-based trajectory can hence be configured not to include any radial distance information to the hypothetical object 30.

A hypothetical three-dimensional radar-based trajectory can accrue based on both directional and distance information from the radar 120 and may describe the movement of the hypothetical object 30 in three dimensions, in a suitably selected coordinate system (e.g. yaw, pitch and radial distance), in relation to the radar 120.

As is the case for the camera-based trajectories described above, the hypothetical radar-based trajectories will be denoted merely "radar-based trajectories" (and not "hypothetical") in case they refer to the movement of the actual objects 20, such as to the object 10 to be tracked.

As is also correspondingly the case for camera-based trajectories, a "radar-based trajectory", as the term is used herein, can refer to either a two-dimensional or a three-dimensional radar-based trajectory.

Hence, the term "camera-based" refers to the fact that the trajectory in question is determined based, entirely or at least partly, on measurement information from the camera 110. Correspondingly, the term "radar-based" refers to the fact that the trajectory in question is determined based, entirely or at least partly, on measurement information from the radar 120.

Furthermore, sometimes the terms "trajectory", "two-dimensional trajectory" and "three-dimensional trajectory" are used herein without it being specified whether such trajectories are camera-based or radar-based. In such cases, the referred-to trajectory can generally relate to a trajectory that has been determined based both on measurement data from the camera 110 as well as on measurement data from the corresponding radar 120 configured to work together with the camera 110.

In some embodiments, the digital image analyzer 130 analyzes the respective consecutively captured images from the one or more cameras 110 to determine one or more hypothetical two-dimensional or three-dimensional camera-based trajectories. This analysis can be performed by correlating the consecutively captured images, and in particular identified blobs 125 in the images, to find potential such trajectories. Simultaneously, the radar information analyzer 150 can analyze, by correlation, the radar information measured by the one or more radars 120 to determine one or more hypothetical one-dimensional, two-dimensional or three-dimensional radar-based trajectories. Then, the hypothetical camera-based trajectories can be correlated and matched with the hypothetical radar-based trajectories, and a three-dimensional trajectory of the object 10 can be determined using a specific combination of a hypothetical camera-based trajectory that is matched with a hypothetical radar-based trajectory.

Sometimes, it can be difficult or impossible to find a matching hypothetical radar-based trajectory for a given hypothetical camera-based trajectory. For instance, this can be the result of an incorrect determination of the one or more hypothetical radar-based trajectories or an incorrect determination of the one or more hypothetical camera-based trajectories. In the latter case, the digital image analyzer 130 may, for instance, erroneously detect a piece of turf rather than a golf ball. To eliminate this type of problem, the digital image analyzer 130 can be configured to assess each of the one or more hypothetical camera-based trajectories with respect to one or more predetermined heuristics, such as blob 125 size, blob 125 speed in the image plane of the camera 110, blob 125 location in the image plane of the camera 110, blob 125 movement dynamics (such as acceleration or the absence of sudden or unexpected direction changes) in the image plane of the camera 110, blob 125 pixel color, etc., and purge any hypothetical camera-based trajectories that do not meet predetermined requirements in terms of one or more of such heuristics.

In some embodiments, the digital image analyzer 130 is configured to form a three-dimensional model of the movement of each hypothetical object 30, based on the hypothetical two-dimensional camera-based trajectory. This can involve a set of presumptions in terms of an expected movement. For instance, in case the expected object 10 is a golf ball, the object 10 can be expected to move away from the camera 110, first upwards and then downwards, following a trajectory that is a free-fall trajectory affected by a certain ball spin, the ball spin for instance providing a certain lifting force and possibly a lateral bend. This is then an example of a physics model used to filter out non-credible hypothetical camera-based trajectories and/or used to improve a hypothetical camera-based trajectory.

Such transformation of a hypothetical two-dimensional camera-based trajectory into a corresponding hypothetical three-dimensional camara-based trajectory is prone to error, not least under real-time performance requirements and limited hardware capacity. It has been observed that the actual distance to the object 10, as measured by the radar 120, can be very different from a distance estimated by the digital image analyzer 130 without using a stereoscopic camera measurement or radar information. Having an incorrect distance to the object 10 makes the extrapolation of the object 10 flight incorrect. This can lead to hypothetical camera-based trajectories picking up incorrect blobs 125, which becomes an even bigger problem in the common case of high blob 125 count due to false positives. Using incorrect blobs to form the hypothetical camera-based trajectories can in turn lead to the digital image analyzer 130 losing track of a tracked object 10 in case of the object 10 temporarily being obscured by something, such as the body of a golf player obscuring a golf ball being hit.

Always considering the entire viewport 111 of the camera 110 means analyzing many pixel values for each one of the consecutively captured images, which is computationally burdensome. However, in order to be able to retroactively replay many different hypothetical camera-based trajectories, so that each such trajectory can be analyzed in context, it is desirable to have access to the full raw video feed from the camera 110 replay from that point. Storing the raw, uncompressed video from the camera 110 for prolonged periods of recording time can require large amounts of memory, which is also not desirable. In general, storing information only about detected blobs 125 is much more memory efficient than storing the raw image data.

In general, the number of detected blobs 125 directly impacts the number of hypothetical camera-based trajectories. For instance, rapid and/or constant movement of the camera 110 can lead to an excess of active hypothetical camera-based trajectories. Similarly, the presence of an object with a lot of movement going on, such as a large tree blowing in the wind, will typically also result in an excess of detected blobs 125 from that object. A sudden change in lighting, such as a shadow moving quickly along the ground, or clouds, can also cause an increase in the number of detected blobs 125. This leads to a prioritization problem due to possible hardware constraints. If the digital image analyzer 130 is unable to handle the number of active hypothetical camera-based trajectories, it must either kill some of these trajectories earlier than what would otherwise have been the case, or it must skip processing some of the blobs 125 that would otherwise have been processed. This may cause the digital image analyzer 130 to miss one or more of the objects 20, or to detect one or more of the objects 20 at a later point than desired.

The camera 110 can have a sufficiently large camera sensor, in terms of a number of pixels in the image plane of the camera 110, to be able to capture the objects 20 with sufficient detail depending on the type of objects 20 to detect and the circumstances in general. For golf ball tracking, the present inventors have successfully used sensor sizes of 1040x1040 pixels, or even 2080x2080 pixels, in combination with framerates of at least 25 frames per second. The internal parameters of the camera 110, such as chip size and focal length, will generally be known. General information about lens distortion is typically also available. All such properties can be used to transform a detected two-dimensional camera-based trajectory into a corresponding three-dimensional trajectory.

The information provided by the radar 120 to the radar information analyzer 150 can be configured to be split up into consecutive discrete time intervals, also known as Coherent Processing Intervals (CPI). The radar information pertaining to each CPI can then be processed separately, in chronological order (as opposed to in a received order, that may be different if the Internet 2 is used for communications). To avoid excessive delay, a maximum delay can be enforced, so that CPI data is dropped in case the maximum delay limit is exceeded.

The raw detections provided by the radar 120 can hence be passed to the radar information analyzer 150, that in turn can be configured to use radar information from consecutive CPIs to define initial hypothetical radar-based trajectories, such as hypothetical two-dimensional or three-dimensional radar-based trajectories. Each of these hypothetical radar-based trajectories can then be further enhanced, as time moves along and additional CPIs are received and processed. For instance, a simple linear model can be used for interpolation between observations of hypothetical objects 30 from different CPIs. The model can also be continuously updated using smoothing. To avoid an explosion of the number of hypothetical radar-based trajectories, each of these can be placed into an origin defined by the first few detections of the hypothetical object 30 covered by the hypothetical radar-based trajectory in question. A top list of current hypothetical radar-based trajectories can be kept and managed for each unique such origin, allowing the removal of any hypothetical radar-based trajectories that originate from the same location and that turn out to be poor in absolute terms over time, or in relation to other ones, depending on some predetermined criteria. Once at least one of the hypothetical radar-based trajectories having the same origin is deemed to be sufficiently long and good, again according to some predetermined criteria, it can be determined to be sufficiently reliable and can then be presented by the radar information analyzer 150 to the digital image analyzer 130 and/or the object tracker 140.

In a way similar to the determination by the digital image analyzer 130 of whether or not a hypothetical camera-based trajectory is reasonable, the criteria used by the radar information analyzer 150 can use parameters such as object direction, speed, acceleration, movement pattern and so forth, depending on the concrete use case and its prerequisites. In some embodiments, a physics model can be utilized, describing for instance the limits of how an object in more or less free-fall is allowed to behave in terms of its movement as observed by the radar 120 and presented in the series of CPIs.

Concretely, each hypothetical two-dimensional radar-based trajectory can be stored, in a digital memory, as only a latest detection of the hypothetical object 30 in question, in addition to metadata, such as a set of one or more current scores, for the hypothetical radar-based trajectory. In such embodiments it does not contain the full path of the hypothetical radar-based trajectory. Instead, it can reference a parent hypothetical radar-based trajectory that it builds upon (via the metadata), and a full path can then be accessed from any hypothetical radar-based trajectory by walking backwards through its parent references.

For each hypothetical radar-based trajectory, two or more scores can be kept simultaneously, in essence attempting to estimate whether the hypothetical object 30 is seemingly moving at all, is not simply noise, and that it moves in a way expected from one of the objects 20.

This part of the analysis performed by the radar information analyzer 150 can, for instance, be conducted according to the following scheme:

> Firstly, for each hypothetical radar-based trajectory h:
>
>> Remove h if it is unreferenced by other hypothetical radar-based trajectories.
>> Skip h if it is dead.
>> Remove h if it is poor in absolute or relative terms, according to the predetermined criteria.
>> For each detection d of a hypothetical object 20 comprised in a received CPI:
>> Attempt to extend h with d. If possible, produce a new hypothetical radar-based trajectory.
>
> Secondly, use the current set of detections d and a corresponding previous set of detections p to form new hypothetical radar-based trajectories.
> Thirdly, remove duplicate paths.
> Fourthly, if an origin is deemed to be sufficiently reliable, then present the best hypothetical radar-based trajectory from that origin to the digital image analyzer 130 and/or the object tracker 140.
> Fifthly, iterate.

In general, at least one of, firstly, radial distance and/or speed information and, secondly, directional information, regarding one or more hypothetical moving objects 30 in relation to the radar 120, can be received from the radar 120 at two or more different points in time (different CPIs). This received information is then denoted "hypothetical radar-based object information" or "hypothetical radar information" for short. Then, this hypothetical radar-based object information can be correlated across the two or more different points in time to form one or more hypothetical one-dimensional, two-dimensional or three-dimensional radar-based trajectories for one or more of the hypothetical objects 30.

A physics model can be applied, as a part of this correlation process or retroactively onto the resulting hypothetical radar-based trajectories, in order to filter out any radar-based trajectories that are deemed to be unreasonable based on predictions made by the physics model and/or to improve (such as smoothen, adjust or correct) the hypothetical radar-based trajectory based on information provided by the physics model. Hence for example, the physics model can be applied to the hypothetical radar information and/or to the resulting hypothetical radar-based trajectory to determine credibility of the hypothetical radar-based trajectory, and one or more of the hypothetical radar-based trajectories can then be disregarded based on the determined credibility.

It is noted that the physics model can be a two-dimensional physics model or a three-dimensional physics model (or in some cases even a one-dimensional physics model, for instance in the case of detection of an object 10 rolling across the ground). Correspondingly, the assessed hypothetical radar-based trajectories can be one-dimensional, two-dimensional or three-dimensional trajectories. This filtering or improving of the hypothetical radar-based trajectories can take place without considering any information from the camera 110.

As described elsewhere herein, the physics model can be a model of how the objects 20 are expected to move, such as (in the exemplary case of tracked golf balls) a golf ball in free fall but with a certain lifting force and/or a certain sideways bend due to ball spin.

Hence, the digital image analyzer 130 continuously analyzes the consecutively captured images 122 to produce one or more updated hypothetical camera-based trajectories and the radar information analyzer 150 analyzes the updated directional, distance and/or speed radar information to produce one or more updated hypothetical radar-based trajectories. Each such hypothetical trajectory is with respect to a hypothetical object 30, which in turn may or may not be an actual object 20 moving through the three-dimensional space 1.

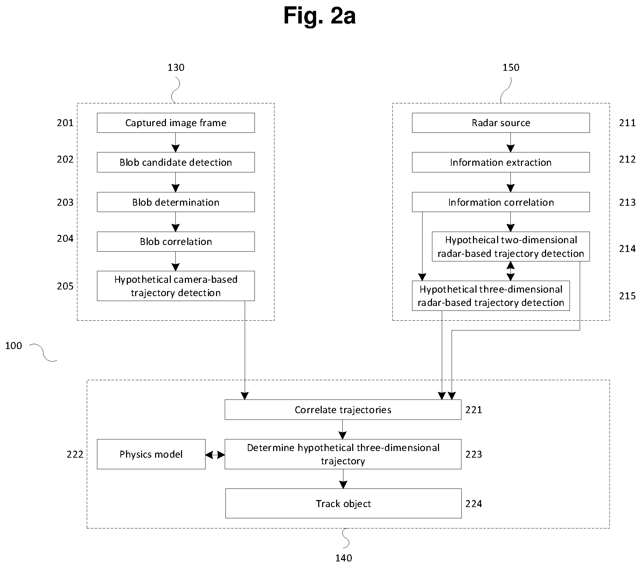

This is illustrated in Figure 2a, showing the digital image analyzer 130, the radar information analyzer 150 and the object tracker 140, including their interrelationships.

The method illustrated in Figure 2a, similarly to the other methods disclosed herein, is a method for tracking the object 10 moving through the three-dimensional space 1 within the field of view 111 of the digital camera 110.

In an operation 201, a captured image frame, such as the image 122 most recently captured by the camera 110, is made available to the digital image analyzer 130. In general, the series of consecutively captured images 122 are obtained from the digital camera 110 by, or are otherwise provided to, the digital image analyzer 130.

In a subsequent operation 202, the captured image frame is analyzed, at individual pixel 124 level, to detect blob candidates (in other words, blob candidate pixels). In particular, for each of a plurality of pixels 124 of the images 122, the digital image analyzer 130 is configured to determine if the pixel 124 in question is a blob candidate by determining if a current signal value for the pixel 124 deviates from a baseline value for the pixel 124 by more than a pixel signal noise threshold value. For instance, the baseline value can be an average pixel value for the pixel 124 in question, as measured and calculated over a recently elapsed time period up until the pixel value considered. In general, the baseline value is a normal or expected value for the considered pixel. Hence, the baseline value can, and in general will, be different for different pixels 124 across the image plane.

The pixel signal noise threshold value can be determined with respect to the consecutively captured images 122. In other words, the pixel signal noise threshold value can be dynamically determined based on recent historical pixel signal values of the considered pixel 124, so that for instance a less variable pixel 124 can be associated with a smaller threshold value and vice versa. In other embodiments, the threshold value can be static and/or the same for all pixels 124. Alternatively, the threshold value can depend on where in the image 122 the considered pixel 124 is located according to a predetermined mapping between areas of the image 122 and threshold values. In general, the pixel signal noise threshold can be determined in a way so that it depends on a historical variability, variance or standard deviation of the pixel signal value of the considered pixel 124.

In some embodiments, the comparison between the pixel value and the baseline value can be configured to result in that pixels 124 that are detected to be blob candidates have respective pixel values that deviate from a normal or expected value by more than a pixel variability-depending threshold, in a way so that pixels 124 that vary relatively more in pixel intensity than other pixels 124 in the image plane are selected as blob candidates.

It is realized that alternative ways of determining blob candidates 124 exist.

Two or more such detected blob candidates can then, in an operation 203, be combined into one or more blobs 125. For instance, two or more blob candidates that are located adjacently in the image 122 can be automatically grouped together to form a blob 125. In various embodiments, algorithms can be applied to force each blob 125 to have a predetermined type of shape, such as a circular or elliptical shape; to force each blob 125 to have a certain minimum or maximum pixel size; and similar. In other words, blobs 125 can generally be defined based on determined blob candidates rather than by strictly grouping blob candidates together.

In an operation 204, the determined blobs 125 can be correlated across two or more different ones of the series of consecutively captured images 122 to determine a hypothetical camera-based trajectory of the object 10 through the three-dimensional space 1. It is noted that this trajectory at this point is a hypothetical two-dimensional camera-based trajectory, constructed from two or more different detected blobs 125 at different image plane locations in two or more different respective images 122 captured by the same camera 110 at different points in time.

In a possibly parallel flow, in an operation 211, the hypothetical radar-based object information is provided to the radar information analyzer 150. The hypothetical radar-based object information is at this point with respect a hypothetical object 30 that may or may not be one of the actual objects 20.

In an operation 212, directional and/or radial distance/speed information is extracted from the hypothetical radar information, including any transformations etc. depending on the concrete application.

In an operation 213, the radar information is correlated over time, as described and exemplified above.

In an operation 214, one or more hypothetical two-dimensional radar-based trajectories are determined based on the correlation in operation 213. These two-dimensional radar-based trajectories can be fed to the object tracker 140 for use therein and/or to the digital image analyzer 130.

Alternatively or additionally, in an operation 215, the correlation in operation 213 can result in one or more hypothetical three-dimensional radar-based trajectories that can then be fed to the object tracker 140 and/or to the digital image analyzer 130. For instance, the hypothetical radar information can comprise three-dimensional location information useful for constructing such hypothetical three-dimensional radar-based trajectories.

In some embodiments, the one or more hypothetical two-dimensional radar-based trajectories can each be transformed into a corresponding hypothetical three-dimensional radar-based trajectory, that can then be fed to the object tracker 140 and/or to the digital image analyzer 130.

The hypothetical radar information can, in some embodiments, include directional information regarding the object 10 (or at this point regarding a hypothetical object 30) to track in relation to the radar 120. This makes it possible to determine where the hypothetical object 30 being observed by the radar 120 is located in terms of the corresponding image plane coordinates, via a suitable coordinate transformation.

Hence, the hypothetical camera-based trajectories and the hypothetical radar-based trajectories can be passed to the object tracker 140, that in turn, in an operation 221, correlates these trajectories to each other in an attempt to find one or more actual trajectories 11 of objects 20, in the form of a hypothetical three-dimensional trajectory. This correlation can be performed by simply comparing two or more pairs of hypothetical camera-based trajectories of hypothetical radar-based trajectories with each other in a common coordinate system and note any pairs that are sufficiently correlated in terms of a predetermined criterion. It is noted that both the hypothetical camera-based trajectories and the hypothetical radar-based trajectories at this point individually can be two-dimensional or three-dimensional trajectories. In some cases, the hypothetical radar-based trajectories can even be one-dimensional trajectories.

The correlation between the hypothetical camera-based trajectories and the hypothetical radar-based trajectories can be performed in a common coordinate system. In some cases, the radar-based trajectories are transformed into the coordinate system of the captured image 122 (the viewport of the camera 110). In some cases, the hypothetical camera-based trajectories are transformed into a coordinate system used to define the hypothetical radar-based trajectories, such as a three-dimensional coordinate system of the space 1. In other cases, a different common coordinate system can be used into which both the hypothetical camera-based trajectories and the hypothetical radar-based trajectories are transformed. In case the common coordinate system is a two-dimensional coordinate system, any three-dimensional ones of the hypothetical camera-based or radar-based trajectories are projected onto the common coordinate system before performing the correlation. In case the common coordinate system is a three-dimensional coordinate system, any two-dimensional ones of the hypothetical camera-based or radar-based trajectories are transformed into the three-dimensional coordinate system before the correlation is performed, such as using heuristics, presumptions, etc. as discussed above.

One way to find a matching hypothetical radar-based trajectory for a given hypothetical camera-based trajectory is to filter the available hypothetical radar-based trajectories with respect to an estimated object 10 launch time for the hypothetical camera-based trajectory. Since the camera 110 may not have observed the actual launch (such as the strike of the golf ball by the golf club), this launch time can potentially be an estimate rather than an exact measurement. In various embodiments, even a relatively rough estimate, based on at least one predetermined heuristic (such as a presumption regarding the time of flight from launch until a first blob detection in a captured image 122), has proven to be adequate to this end.

In general, since the camera 110 properties and parameters are known, each hypothetical two-dimensional camera-based trajectory can be transformed into unit vectors specifying the direction towards the object 10 in each image 122. As long as the hypothetical radar information comprises directional information, it is possible to produce each hypothetical radar-based trajectory to be a two-dimensional or three-dimensional trajectory containing directional trajectory information. Further, the relative position and orientation of the camera 110 and the radar 120 is known. It is then possible, using this information, to compare the unit vectors from the hypothetical two-dimensional camera-based trajectory with each of the hypothetical radar-based trajectories to assess the geometric similarity of the two in terms of location, shape and so forth. The geometric similarity can be assessed per se using standard geometric tools, depending on the concrete application.

Once a hypothetical two-dimensional camera-based trajectory has been associated with a corresponding hypothetical radar-based trajectory, this pair of hypothetical trajectories can be monitored by the object tracker 140 going forward, using updated trajectory information provided from the digital image analyzer 130 and the radar information analyzer 150. The object tracker 140 can keep track of an updated correlation between the two hypothetical trajectories, and if it turns out that the correlation decreases, for instance due to deviating trajectory directional information, the pair can be broken.

However, for pairs of a hypothetical camera-based trajectory and a hypothetical radar-based trajectory that are found to be associated with a high correlation, and in some embodiments across a predetermined minimum time period, in an operation 223 a corresponding hypothetical three-dimensional trajectory can be determined based both on the hypothetical two-dimensional camera-based trajectory and the corresponding hypothetical radar-based trajectory. This can be achieved in various ways, utilizing the available information in the best way depending on the needs of the particular concrete embodiment.

For instance, once the correlation between the two trajectories is determined to fulfill a certain predetermined condition, such as surpassing a particular predetermined threshold, the pair of hypothetical trajectories can be considered locked one to the other. From this point, the hypothetical three-dimensional trajectory can be defined in terms of the directional information from the hypothetical camera-based trajectory in combination with the radial distance or speed information from the hypothetical radar-based trajectory.

The hypothetical three-dimensional trajectory can then be monitored over time, and it may be compared with various heuristics. For instance, in an operation 222, a physics model can be applied to the hypothetical three-dimensional trajectory with the aim of filtering out hypothetical three-dimensional trajectories that do not fulfill one or more physics-based criteria such as applying to objects 20 in (near) free-fall or dictating that objects 20 cannot move faster than a particular set highest speed. Hypothetical three-dimensional trajectories that do not fulfill such heuristics can be discontinued.

One, two or more or each of the detected hypothetical three-dimensional trajectories can be individually categorized into one or more of a predetermined set of classes for such trajectories, each such class reflecting a certain one of a set of different predetermined foreseeable behaviors for the objects 20. In the example of golf ball tracking, such classes can include a launch due to the golf ball being struck by a golf club from one of a number of different possible strike locations, such as from one or more available driving range bays; a bounce on the ground of the golf ball; a rolling on the ground by the golf ball; and a golf ball temporarily being hidden by an obscuring object, such as the striking golf player. In the example of baseball tracking, such classes can include a launch due to the baseball being thrown by a thrower; and a launch due to the baseball being struck by a bat; and so forth. The categorization of the hypothetical three-dimensional trajectory can be performed using various predetermined parameters in terms of the shape, location and/or speed of the hypothetical three-dimensional trajectory, and thereafter be used to either filter out the trajectory in case it no longer obeys the prerequisites for the class to which it has been categorized and/or to improve the determination of the trajectory going forward by using known properties of the class to supplement the available measurement data from the camera 110 and the radar 120, for instance to decrease the impact of measurement noise.

It is understood that a corresponding set of predetermined classes for hypothetical trajectories can be individually applied to one or both of the hypothetical camera-based two-dimensional trajectories determined and updated by the digital image analyzer 130 and the hypothetical one-dimensional, two-dimensional or three-dimensional radar-based trajectories determined and updated by the radar information analyzer 150.

Returning to operation 223, each hypothetical three-dimensional trajectory that is deemed to be sufficiently credible, such as based on one or more predetermined criteria (such as the above-described heuristics being fulfilled for a minimum predetermined time period) or, in some embodiments, merely as a result of the correlation between the two hypothetical trajectories, can be selected as a verified three-dimensional trajectory of the object 10. In general terms, the determining of the trajectory 11 for the object 10 as one of the hypothetical three-dimensional trajectories can be performed based on the applying of a physics model (operation 222) that can be of the above-discussed type.

This three-dimensional trajectory of the object 10, which is from that point in time no longer hypothetical but considered to be actually measured (verified) from the point of view of the system 100, can then, in an operation 224, be used to track the object 10.

For instance, such tracking can involve displaying, on a computer display, a graphical trace of the object's 10 trajectory overlaid on a background image. Alternatively or in addition thereto, the tracking can involve using the three-dimensional trajectory as a basis for calculations of additional information, such as a spin of the object 10 or a projected stroke distance of the object 10 before it lands on the ground.

Figure 5 illustrates an example of how the hypothetical radar information can be processed by the radar information analyzer 150, and in particular regarding how to produce a hypothetical three-dimensional radar-based trajectory to be used as described above. In the plot of Figure 5, measured radar trace information is shown in two dimensions, namely azimuth and elevation. Figure 5 shows a unit circle, outside of which any radar detections are not possible since the azimuth and elevation model two components of a three-dimensional unit vector. The last (third) component of this three-dimensional unit vector is defined as $\sqrt{1 - a^2 - b^2}$, where a is azimuth and b is elevation. Figure 5 also shows, in broken lines, so-called "ambiguity boxes", where in the present example any detection in one such ambiguity box also will be present in the other boxes, in the same relative position after the transformation of the hypothetical radar information into a hypothetical three-dimensional radar-based trajectory. This is a result of the radar antenna used being symmetric, which makes it not possible to unambiguously determine which one of these directions is the true direction (if any). There are, however, two or more available heuristics that can be applied to filter the ambiguous traces detected:

Firstly, if more than a few edge detections fall outside the unit circle once the hypothetical three-dimensional radar-based trajectory has been constructed, this is a sign that this trajectory is not valid. Of course, individual outliers can also be filtered out as simply being misreads, such as due to noise.

Secondly, various heuristics can be used to filter out hypothetical three-dimensional radar-based trajectories that are unreasonable. For instance, for a golf ball trajectory showing the golf ball being 200 meters above or below the radar 120, this trajectory can be deemed to be unreasonable.

Thirdly, filtering can occur as a part of the correlation in operation 221, so that any hypothetical three-dimensional radar-based trajectory that does not correspond to any available hypothetical camera-based trajectories will be filtered out.

Using such heuristics, it is normally possible to filter out any incorrect hypothetical three-dimensional radar-based trajectories, such as erroneous or ambiguous trajectories. This filtering can be applied as a part of the transformation of the hypothetical radar information into one or more corresponding hypothetical three-dimensional radar-based trajectories and/or after this transformation has been finalized. The result will then be zero, one or more possible hypothetical three-dimensional radar-based trajectories corresponding to the updated hypothetical radar information.

Going forward, the method operations 201-224 are iterated, so that updated camera-based and radar-based data is processed and the results passed to the object tracker 140 continuously or intermittently, e.g. as soon as the data is made available. Any three-dimensional trajectories detected and monitored by the object tracker 140 can be purged if and when they no longer fulfill certain predetermined conditions, such as the corresponding hypothetical camera-based and/or radar-based trajectory no longer delivering an expected trace; the three-dimensional trajectory no longer fulfilling one or more predetermined heuristics of the above-described types; a landing being detected with respect to the object 10; and so forth.

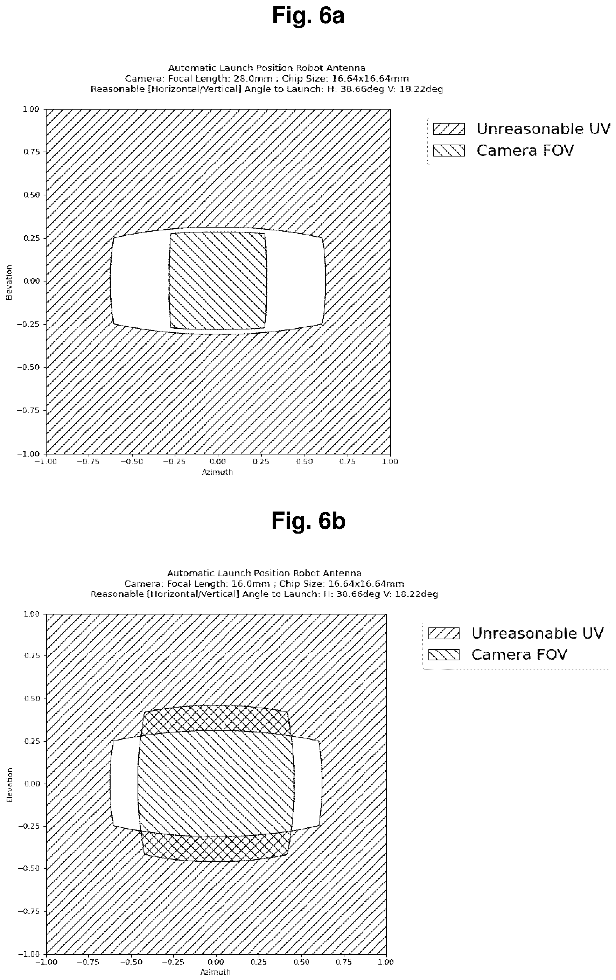

Figures 6a and 6b show, for two different exemplary use cases, overlaid illustrations in relation to the three-dimensional space 1 of, firstly, where the radar 120 can uniquely identify a hypothetical three-dimensional radar-based trajectory given only the hypothetical radar information and, secondly, the field of view, in the azimuth/elevation space, of the corresponding camera 110. Thus, for the exemplary 28 mm lens (Figure 6a) viewed here as an example, it is possible to uniquely identify the entire three-dimensional trajectory using only the radar detections, if this trajectory lies entirely within the field of view of the camera 110. This is, however, not in general the case, and in particular not with a wider 16 mm lens (Figure 6b). If a majority of the three-dimensional trajectory lies within the field of view of the camera, it is generally possible to add more heuristics to filter out incorrect hypothetical radar-based trajectories using information from the camera 110.

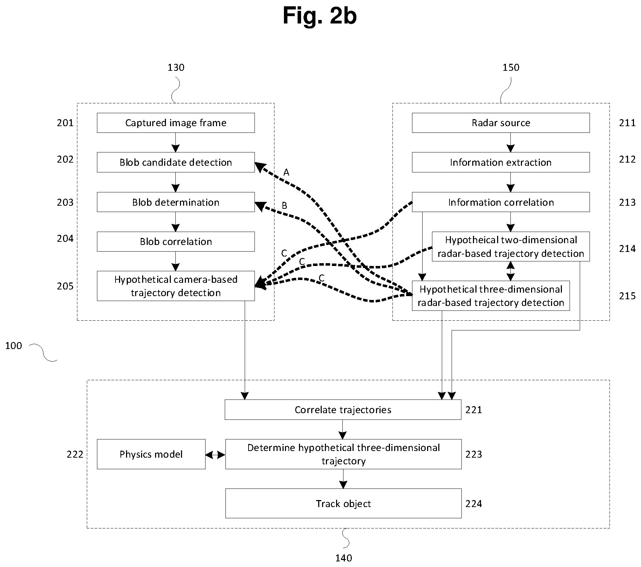

Figure 2b is similar to Figure 2a, but shows additional processing of the available information according to various aspects of the present invention.

Hence, as is the case for Figure 2a, Figure 2b illustrates a method for tracking the object 10 moving through the three-dimensional space 1 within the field of view 111 of the digital camera 110 and using hypothetical radar information from the radar 120.

As mentioned above, the available hardware of the digital image analyzer 130 may not be able to handle the number of hypothetical camera-based trajectories that it can extract from detected blobs 125 in the consecutively captured images 122. In such cases, the digital image analyzer 130 may have to kill some of these hypothetical camera-based trajectories early and/or skip processing some of the blobs 125.

To solve this problem, the workload of the digital image analyzer 130 can be prioritized using the hypothetical radar information. Specifically, one or more two-dimensional locations in the camera frame can be estimated for a hypothetical object 30 using an updated set of hypothetical two-dimensional or three-dimensional radar-based trajectories.

Hence, in operation 211, hypothetical radar-based object 30 information is provided to the radar information analyzer 150 as described above. In operation 212, at least directional information, preferably also together with at least one of radial distance and speed information, is extracted from the hypothetical radar-based object 30 information. In an operation 213, the extracted information is correlated over time.

Figure 2b illustrates three flows, denoted A, B and C, of utilizing the hypothetical radar information to allow the digital image analyzer 130 to prioritize its computing resources. Each of these flows can be applied individually or in combination two-and-two or all three.

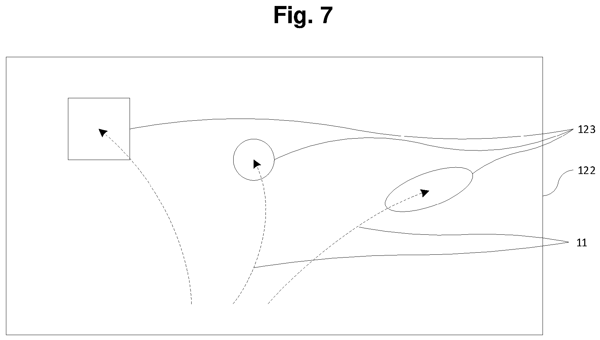

For flows A and B, directional information extracted from the hypothetical radar information is transformed into image plane coordinates specific to the digital camera 110 to determine a region of interest 123 in the captured image 122 (see Figure 7). In other words, each such region of interest 123 corresponds to a currently updated location in a currently considered one of the consecutively captured images 122 of a hypothetical object 30 that later will turn out to be the actual tracked object 10.

In various embodiments, this directional information is obtained by first forming a hypothetical three-dimensional radar-based trajectory and then extracting directional information regarding an updated three-dimensional location, in relation to the radar 120, from that hypothetical three-dimensional radar-based trajectory to form the directional information fed to the digital image analyzer 130 in flows A and/or B. The forming of the hypothetical three-dimensional radar-based trajectory can be performed as described above, such as combining two-dimensional directional radar information to one-dimensional distance/speed radar information, and possibly using various heuristics and/or a physics model to construct, adjust the trajectory and/or filter out unreasonable trajectories. Once the hypothetical three-dimensional radar-based trajectory is formed, the updated estimated location of the object 30 can be used as the directional information fed to the digital image analyzer 130.

Then, the determining by the digital image analyzer 130 of if individual ones of the plurality of pixels 124 are blob candidates 124 can be performed based on the at least one region of interest 123 in various ways, that can be applied individually or in any suitable combination.

In a first case according to flow A, the determining of if individual ones of the plurality of pixels 124 are blob candidates is performed only with respect to pixels 124 of the plurality of pixels 124 that are within the at least one region of interest 123 and not with respect to pixels 124 of the plurality of pixels 124 that are not within the at least one region of interest 123. In other words, the one or more regions of interest 123 stipulates to what extent individual pixels 124 are at all considered with respect to if they are blob candidates or not.

In a second case according to flow A, the determining of if individual ones of the plurality of pixels 124 are blob candidates is performed with respect to pixels 124 of the plurality of pixels 124 that are within the at least one region of interest 123 before pixels 124 of the plurality of pixels 124 that are outside of the at least one region of interest 123. Hence, pixels 124 outside of the one or more regions of interest 123 can be considered, but pixels 124 within the one or more regions of interest 123 are prioritized. In case a hardware resource is depleted in the digital image analyzer 130, less prioritized pixels 124 can be skipped and not analyzed to see if they are blob candidates, for one or more of the consecutively captured images 122.

In a third case according to flow A, the determining of respective pixel noise threshold values for individual ones of the plurality of pixels 124 is performed based on the at least one region of interest 123. More particularly, the determination can be performed such that pixel noise threshold values for pixels 124 of the plurality of pixels 124 that are within the at least one region of interest 123 are determined to be relatively lower than pixel noise threshold values for pixels 124 of the plurality of pixels 124 that are outside of the at least one region of interest 123. Hence, for pixels outside of the one or more regions of interest 123, pixel values can be required to vary further from their expected value in order to be identified as blob candidates.

Each region of interest 123 can be individually defined as a region having a certain predetermined shape, such as a circular, elliptical, rectangular or square shape. The shape of each region of interest 123 can also individually be defined in terms of an expected future trajectory of the hypothetical object 30 detected by the radar information analyzer 150 given historical radar-based measurements for the hypothetical object 30 in question, for instance by the corresponding region of interest 123 being shaped as an elongated shape containing and being formed along such an expected future trajectory. Each region of interest 123 will normally contain the expected currently updated location of the hypothetical object 30 in the captured image 122 at a point in time for an analyzed captured image 122.

Each region of interest 123 can individually be defined with a clearly defined border, but it can also individually be defined with a gradient-like border. In the latter case, the determination of if each pixel 124 is a blob candidate can take place with more or less influence of the flow A-type conditions depending on the value of the gradient of the region of interest 123 in question. For instance, in case pixels 124 being "in" the region of interest 123 are prioritized, pixels at the center of the region of interest 123 can be processed before pixels near a periphery of the region of interest 123.

In some embodiments, now according to flow B, pixels 124 that have been determined to be blob candidates can be incorporated into blobs 125 using corresponding mechanisms as described with respect to the flow A alternatives above. Hence, blob candidates can be incorporated into blobs 125 only if they are inside the at least one region of interest 123; or blob candidates outside of the at least one region of interest 123 can be incorporated into blobs 125 after blob candidates inside the at least one region of interest 123 (order of prioritization). One or more of such rules can be applied to individual pixels 124; to blob candidates; or both. The at least one region of interest 123 can be the same or different for determination of blob candidate status and for the determination of blobs 125. As an example, blob candidates can be determined until an available hardware resource is depleted (such as a certain predetermined number of compute cycles or a predetermined elapsed processing time), with priority given to pixels inside the at least one region of interest 123. Thereafter, the at least one region of interest 123 can be grown, such as by expanding a defined circular shape by increasing its radius a predetermined percentage, and blobs 125 can be determined based only on blob candidates within the expanded region of interest 123 in question.

In Figure 7, three different examples of hypothetical three-dimensional radar-based trajectories (dashed lines) that have been projected onto the two-dimensional coordinate system of the image plane of the camera 110 (the image plane of the captured image 122). Each such trajectory has been provided with a respective region of interest 123, which is hence determined as a function of where in the image plane the hypothetical object 30 detected by the radar 120 is expected to be at the point of time of the capturing of the image 122 in question. One quadratic, one circular and one elliptic region or interest 123 are shown, for exemplary purposes. The elliptic region of interest 123 is aligned so that its major axis is parallel to an expected trajectory direction of the hypothetical object 30.

By forming a bounding area around each such expected point, it is possible to produce an efficient filter for the processor-heavy determination of the blobs 125.

In various embodiments, the flow A and/or flow B processing is performed iteratively. Hence, updated directional information is received from the radar 120 regarding the hypothetical object 10 in relation to the radar 120 (operations 211, 212). Then, the updated directional information is transformed into the image plane coordinates to determine an updated region of interest 123 corresponding to an updated location in the consecutively captured images 122 of the hypothetical object 30. This may involve time-synchronization actions such as interpolating or extrapolating from available radar-based data points, to match a time of capture of the captured image 122 considered. Finally, the determining if individual pixels 124 of the plurality of pixels 124 are blob candidates and/or if blob candidates should form part of blobs 125, is performed based on the updated region of interest 123 in any of the ways discussed above.

In particular, the hypothetical three-dimensional radar-based trajectory can be extrapolated to achieve an expected future location of the hypothetical object 30 that matches a point in time when the processed image 122 was captured. This extrapolation can at least be determined based on the directional information received from the radar 120, but can further be based on also any distance and/or speed information. In some embodiments, a hypothetical three-dimensional radar-based trajectory is determined with respect to the hypothetical object 30, and that three-dimensional trajectory can then be extrapolated using a physics model for the objects 20. Then, the region of interest 123 can be determined based on the expected future location of the hypothetical object 30 given such extrapolation.

As mentioned, the hypothetical radar-based trajectory used to determine the region of interest 123 can be a three-dimensional trajectory that is projected onto the coordinate system of the captured image 122 using a priori knowledge of camera 110 properties, radar 120 properties and a geometric relationship between the camera 110 and the radar 120. Hence, in such cases radial distance and/or speed information is received from the radar 120 (operations 211 and 212), regarding the hypothetical object 30 in relation to the radar 120. Then, a hypothetical three-dimensional radar-based trajectory can be calculated, based on the directional information and the radial distance and/or speed information, this three-dimensional trajectory thereafter being projected, using a suitable transformation, onto the image plane coordinates of the captured image 122 to achieve a corresponding hypothetical two-dimensional radar-based trajectory. The region of interest 123 can then be determined based on the projected two-dimensional radar-based trajectory.

As mentioned, and as is illustrated in Figure 7, the hypothetical radar information received from the radar 120 can comprise directional information (and possibly also distance or speed information) regarding two or more hypothetical objects 30 that are detected concurrently in relation to the radar 120. In such cases, two or more concurrent regions of interest 123 can be determined, each corresponding to the directional information of one such detected hypothetical object 30, and the determining if individual pixels 124 of the plurality of pixels 124 are blob candidates or not, and/or if individual blob candidates are to form part of blobs 125, can be performed based on each of the two or more concurrent regions of interest 123. Such regions of interest 123 can be overlapping or non-overlapping, and from one point of view they can be seen as together forming a super-region of interest that can be used as an efficient filter for blob detection by the digital image analyzer 130.

In some embodiments, a confidence value can be determined regarding the directional information, either the directional information received from the radar 120 or the directional information that results as a part of the projection of the hypothetical three-dimensional radar-based trajectory onto the coordinate system of the captured image 122. Such confidence value can, for instance, be determined based on a priori knowledge about directional sensitivity of the radar 120, for instance as a function of a measured radial distance and/or speed of the hypothetical object 30. The confidence value can also be determined based on a variability of the hypothetical radar-based trajectory and/or using a physics model regarding the objects 20 and a comparison between the hypothetical two-dimensional or three-dimensional trajectory to such a physics model to determine to what extent the trajectory in question adheres to an expected object 20 behavior according to the physics model. In some embodiments, the confidence value is determined based on a general or updated signal to noise ratio for the radar 120. The confidence value can also be determined based on any suitable combination of such and other factors.

Then, the region of interest 123 can be determined based on the confidence value, for instance so that a higher confidence value ("higher" here denoting better confidence regarding the directional information) results in a smaller and/or more well-defined (in terms of gradients on a border of the region of interest 123 or similar) region of interest 123. In general terms, a distribution, across the image plane coordinates of the captured image 122, of the region of interest 123 can be determined based on the confidence value.

As mentioned above, the determining of if individual pixels 124 of the plurality of pixels 124 are blob candidates and/or if individual blob candidates are to form part of blobs 125 can be performed until an available or allocated computing resource has been exhausted. This can mean until a predetermined amount of compute has been spent, such as in terms of a number of computational cycles, processing time, actual time, a number of processing cycles in a loop-type processing, etc. This can also mean until an available memory is full or as a function of an available maximum communication bandwidth. In some examples, the processing of pixels 124 and/or blob candidates can go on with respect to a certain captured image 122, with applicable prioritizations between individual pixels 124 and/or blob candidates depending on the at least one region of interest 123 considered, until it is time for a next captured image 122 in the series of consecutively captured images 122 to be processed. At this point, processing of the first captured image 122 will cease, and processing of the next captured image will commence. All non-analyzed pixels 124 and/or blob candidates will then be skipped.

As described above, a corresponding set of the determined blobs 125 can be determined for two or more of the consecutively captured images 122, and this determined set can be correlated across the images 122 in question to form the set of one or more hypothetical camera-based trajectories for one or more hypothetical objects 30. Such hypothetical camera-based trajectories can be two-dimensional (tracing only across the image plane of the image 122 disregarding distance to the hypothetical object 30), or the digital image analyzer 130 can attempt to convert the correlated blobs 125 into one or more hypothetical three-dimensional camera-based trajectories.

Such conversion can be performed using a physics model, that can be used to filter out one or more of the hypothetical camera-based trajectories based on a determined credibility of the trajectory in question as determined using the physics model. For instance, golf balls can be assumed not to suddenly switch direction mid-flight, and if a hypothetical object 30 expected to be a golf ball displays such behavior it can be filtered out. The filtering out can be performed by simply disregarding and deleting such filtered-out hypothetical camera-based trajectories.

In such and other embodiments, a physics model can be used to smooth out or correct hypothetical camera-based trajectories by nudging the trajectory towards a plausible trajectory according to the physics model (such as free-fall with influence of a spin-induced lift and/or bend), or by attempting to perform a best fit of the data underlying the hypothetical camera-based trajectory to a plausible trajectory according to the physics model.

The physics model can be a three-dimensional physics model attempting to describe the behavior of the objects 20 moving across the space 1, or it can be a two-dimensional physics model (that in turn, for instance, can be based on a three-dimensional physics model by projecting the model output onto the two-dimensional image plane of the camera 110).

Both any physics model employed by the digital image analyzer 130, as well as any physics model employed by the radar information analyzer 150, can individually be the same physics model as used in operation 222, or a separate physics model.

Figure 2b also shows a flow C, where the hypothetical radar information, or radar-related information based on the hypothetical radar information, is provided from the radar information analyzer 150 to the digital image analyzer 130 to be used by the digital image analyzer 130 to form the hypothetical two-dimensional or three-dimensional camera-based trajectories. The information provided can comprise at least radial distance or radial speed information, in relation to the radar 120, for one or more hypothetical objects 30. The information provided can be gleaned directly from the hypothetical radar information or from a hypothetical two-dimensional or three-dimensional radar-based trajectory determined by the radar information analyzer 150 based on the hypothetical radar information. In the latter case the information provided can be determined based on interpolation of such radar-based trajectory to be synchronized and matched, with respect to time, with corresponding blob 125 data of the digital image analyzer 130. In some embodiments, the hypothetical radar information, or the resulting hypothetical two-dimensional or three-dimensional radar-based trajectories, are resampled so as to be time-synchronized with the series of consecutively captured images 122 before being used by the digital image analyzer 130.

The information provided in flow C can then be used by the digital image analyzer 130 to form a hypothetical three-dimensional camera-based trajectory from blob 125 data of to form a corresponding hypothetical two-dimensional camera-based trajectory.

In some embodiments, the entire hypothetical radar-based trajectory is not provided by the radar information analyzer 150, but instead only information regarding the hypothetical radar information and/or one or more hypothetical two-dimensional or three-dimensional radar-based trajectories at or near a point in time of a most recently captured image 122 is passed from the radar information analyzer 150 to the digital image analyzer 130.

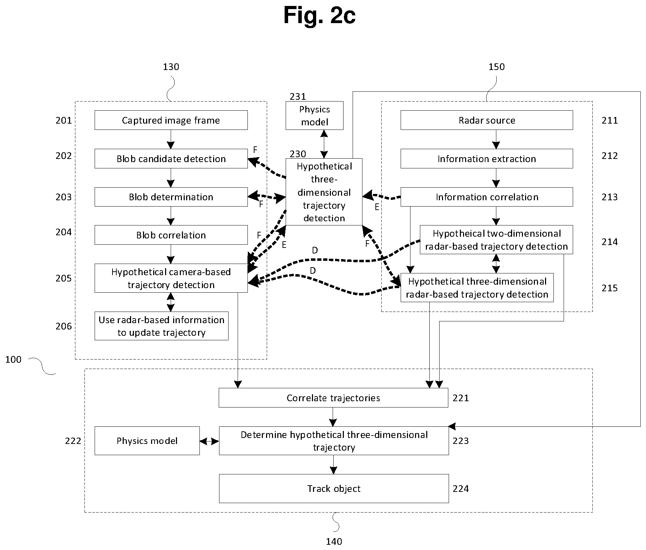

Figure 2c is also similar to Figure 2a, but shows additional processing flows D, E and F of the available information according to various aspects of the present invention. Hence, Figure 2c also illustrates a method for tracking the object 10 moving through the three-dimensional space 1 within the field of view 111 of the digital camera 110 and using the hypothetical radar information from the radar 120.

For flows D, E and F, the hypothetical radar information obtained from the radar 120 comprises directional information regarding the one or more hypothetical moving objects 30 as well as radial distance and/or speed information regarding the one or more hypothetical moving objects 30 in relation to the radar 120.

Furthermore, for one or more of flows D, E and F, two or more hypothetical three-dimensional radar-based trajectories are determined, in operation 215. This determination can be performed as described above. Even though it is possible to perform this determination at least partly taking into consideration information provided from the camera 110 in the above-described embodiments, in embodiments using flows D, E and F this determination can be performed without taking into consideration information from the digital camera 110 at all. In other words, the radar information analyzer 150 can be configured to perform the determination of the hypothetical three-dimensional radar-based trajectories independently of the digital image analyzer 130.

Furthermore, in embodiments using flows D, E and F each of the hypothetical three-dimensional radar-based trajectories can be transformed into image plane coordinates specific to the digital camera 110 to achieve a set of two or more hypothetical two-dimensional radar-based trajectories. This transformation can take place as described above. It is realized that the transformation can also be a transformation into a different two-dimensional coordinate system that is commonly used by the digital image analyzer 130 and the radar information analyzer 150.

This transformation can be performed in an operation 230, generally configured to detect hypothetical three-dimensional radar-based trajectories. Operation 230 can be performed by the radar information analyzer 150, and may for instance be a part of operation 215. Alternatively, operation 230 can be performed by the digital image analyzer 130. Further alternatively, operation 230 can be performed by a logical and/or physical entity being similar to, but separate from, the digital image analyzer 130 and the radar information analyzer 150.

As described above, the operation 205 can comprise the digital image analyzer 130 estimating one or more hypothetical three-dimensional camera-based trajectories. Since the captured images 122 in themselves to not comprise direct depth information, this then entails using various techniques to estimate distance information with respect to the hypothetical objects 30. Such techniques can comprise, for instance, use of stereoscopically operating cameras 110; detection of blob 125 size information; various heuristics; a physics model; and so forth.

In contrast to such approaches, in flows E and F operation 230 instead uses the information contained in the one or more hypothetical three-dimensional radar-based trajectories to directly estimate distance to (or radial speed of) hypothetical objects 30. More particularly, directional information directly or indirectly available from the camera 10 and/or the hypothetical radar information is combined with radial distance and/or speed information gleaned from the hypothetical radar information.

Operation 230 can be configured to select, among a set of one or more detected hypothetical three-dimensional radar-based trajectories, one such hypothetical three-dimensional radar-based trajectory that most closely resembles a considered hypothetical two-dimensional camera-based trajectory and then to use the distance information from the hypothetical radar information to create a hypothetical three-dimensional camera-based trajectory. If no sufficiently close match is found, then the digital image analyzer 130 can instead estimate a corresponding hypothetical three-dimensional camera-based trajectory in any of the ways generally discussed above.

Moreover, as is illustrated by flow D, (two-dimensional) directional information can be provided by the radar information analyzer 150, based on a hypothetical two-dimensional or three-dimensional radar-based trajectory that has been paired with a corresponding camera-based trajectory, directly to the digital image analyzer 130 to be used in operation 205, to determine a corresponding hypothetical three-dimensional camera-based trajectory.

In some embodiments, after operations 201-205, the resulting hypothetical two-dimensional camera-based trajectory is mapped to one of the hypothetical two-dimensional radar-based trajectories determined by the radar information analyzer 150, or to a two-dimensional projection of one of the hypothetical three-dimensional radar-based trajectories. The mapping is performed in the image plane coordinates of the camera 110 and can be performed by the digital image analyzer 130.

Thereafter, a three-dimensional trajectory 11 of the object 10 through the three-dimensional space 1 can be determined based on the hypothetical two-dimensional camera-based trajectory in combination with radial distance and/or speed information associated with the mapped hypothetical two-dimensional radar-based trajectory. In some embodiments, the radial distance and/or speed information can be directly fetched from the hypothetical radar information or indirectly determined from the corresponding hypothetical three-dimensional radar-based trajectory. However, in some embodiments the determining of the directional information of the three-dimensional trajectory 11 is performed only based on information from the camera 110, without considering directional information associated with the mapped hypothetical two-dimensional or three-dimensional radar-based trajectory.

The hence determined three-dimensional trajectory 11 can then be used, in operation 224, to track the object as described above.

As discussed above, the method can thereafter be iterated based on updated information from the camera 110 and the radar 120. More particularly, the two-dimensional camera-based trajectory can be updated based on additional captured images 122 from the digital camera 110, and the object 10 can then be iteratively tracked by determining the three-dimensional trajectory of the object 10 based on the updated two-dimensional camera-based trajectory and also updated radial distance and/or speed information associated with the hypothetical two-dimensional radar-based trajectory. Again, such iterations can be performed without considering any updated information regarding the directional information associated with the hypothetical two-dimensional or three-dimensional radar-based trajectory.

Since the radar information analyzer 150 keeps track of the hypothetical two-dimensional and/or three-dimensional radar-based trajectories, this information can be used to keep track of the object 10 also in case the camera 110 permanently or temporarily becomes unavailable to view the object 10, for instance due to there no longer being a clear line of sight between the object 10 and the camera 110. This may happen, for example, if a tracked golf ball moves behind a hitting golf player. It is noted that the radar 120 will generally, or at least in some cases depending on the detailed embodiment, be able to keep track of the object 10 even if there is no clear line of sight between the object 10 and the camera 110.

Hence, the digital image analyzer 130 can be configured to identify an inability to detect updated information regarding the two-dimensional camera-based trajectory. This inability can, for instance, be identified by noting that no suitable blobs 125 are available to extend the hypothetical two-dimensional or three-dimensional camera-based trajectory under the set of used heuristics, under the currently used physics model, and so forth.

As a result of the identifying of this inability and from a time of the identifying moving forward, in an operation 206 the digital image analyzer 130 can be configured to update the hypothetical two-dimensional or three-dimensional camera-based trajectory using not updated information from the camera 110 but instead based on updated information from the radar information analyzer 150. Such updated information from the radar information analyzer 150 can be in the form of updated information regarding a hypothetical two-dimensional or three-dimensional radar-based trajectory having previously been matched (as discussed above) to the hypothetical camera-based trajectory being processed. In particular, the radar information used to update the hypothetical camera-based trajectory will comprise one or both of directional information and distance/speed information. The updating of the hypothetical camera-based trajectory can be performed by operation 205, as is illustrated in Figure 2c.

Hence, as a result the object 10 is then iteratively tracked based on updated information from the radar 120.

In some embodiments, the hypothetical camera-based trajectory that is identified to no longer be updatable using information from the camera 110 is a three-dimensional trajectory. In this case, updated radial distance and/or speed information is received from the radar 120, via the radar information analyzer 150, as well as updated directional information. Then, the three-dimensional trajectory 11 of the object 10 is updated based on the updated information.

It is noted that, in some embodiments, the digital image analyzer 130 can be configured to, in operation 205, only use the blob 125 information to construct a hypothetical two-dimensional camera-based trajectory, and then to complement this hypothetical two-dimensional camera-based trajectory using distance and/or speed information to form a hypothetical three-dimensional trajectory. This three-dimensional trajectory can be denoted a "camera-based" trajectory even though it is determined partly based on radar information, since it can be used in the same way as the camera-based trajectory otherwise produced by operation 205 and provided to the object tracker 140, as discussed above.

In some embodiments, the radar-based directional information, possibly together also with corresponding radar-based distance/speed information, can be used to estimate how to extend an existing hypothetical two-dimensional camera-based trajectory that the digital image analyzer 130 no longer can extend, for instance due to the object 10 being obscured as discussed above. Hence, the hypothetical radar information can be used to provide directional help when the camera 110 loses sight of the object 10 for a significant time duration, while the radar 120 is still able to observe the ball.

As discussed above, the radar 120 generally has lower accuracy with respect to directional information than the camera 110. In order to improve the precision during such time periods when directional information to construct the hypothetical camera-based trajectory is gleaned from the hypothetical radar information instead of from the blob 125 data, a general systematic error, in terms of directional information, of the hypothetical radar information as compared to corresponding information from the camera 110 can be assessed using a portion of the hypothetical camera-based trajectory observed by both the camera 110 and the radar 120. Thereafter, this assessed systematic error can be used to adjust directional information to be used to form the hypothetical camera-based trajectory during a subsequent time period during which only the radar 120 can view the object 10. In addition to any built-in systematic errors of the radar 120 with respect to directional information resulting from the measurement mechanism of the radar 120, such systematic errors can arise, for instance, from imperfect calibration of the radar 120, from incorrect measurements from an accelerometer used to measure a current orientation of the radar 120, or similar. In some embodiments, historic values of the hypothetical camera-based trajectory in question, from a time before the camera 110 stopped being able to see the hypothetical object 30 in question, can be used to determine the trajectory after such time, by the hypothetical three-dimensional camera-based trajectory that is constructed based on the hypothetical radar information being extrapolated from the historic values.

At a subsequent point in time, a renewed ability to detect updated information regarding the hypothetical two-dimensional camera-based trajectory can be identified, such as by the digital image analyzer 130 noticing that there are anew blobs 125 that can be used to extend the hypothetical two-dimensional camera-based trajectory after the object 10 no longer being obscured.

As a result of this identifying of the renewed ability, and from a time of the identifying moving forward, the object 10 can again be iteratively tracked as before the identifying of the inability of the camera 110 to view the object 10. For instance, the digital image analyzer 130 can then update the hypothetical two-dimensional or three-dimensional camera-based trajectory based on updated blob 125 information, possibly in combination with updated hypothetical radar information, in particular radar-based information regarding radial distance and/or speed associated with a hypothetical radar-based trajectory having been matched with the hypothetical camera-based trajectory. As a result, the three-dimensional trajectory 11 of the object 10 is then determined, by the object tracker 130, based on updated information regarding the two-dimensional or three-dimensional camera-based trajectory and further regarding the radial distance and/or speed information associated with the mapped hypothetical two-dimensional or three-dimensional radar-based trajectory. This tracking can, again, be performed without considering updated information regarding the directional information associated with the hypothetical radar-based trajectory.

It is noted that, in all these embodiments, a currently considered hypothetical two-dimensional or three-dimensional camera-based trajectory is mapped to a best-fitting corresponding hypothetical radar-based trajectory, and that the two trajectories are then followed in concert over time. The mapping can be performed by the digital image analyzer 130, such as in operation 205, or in operation 230. Moreover, the mapping can be performed using per se standard correlation or pattern-mapping techniques, such as a variant of a least squares method, to determine "closeness" between any pair of a hypothetical camera-based trajectory and a corresponding hypothetical radar-based trajectory in the used common coordinate system.

In flow D, direct or derivative hypothetical radar information is fed to operation 205 to be used in the determination of the hypothetical camera-based trajectories.

In flow E, the hypothetical radar information is instead fed to operation 230. Also, determined hypothetical two-dimensional camera-based trajectories are fed to operation 230. Then, operation 230 is configured to map each hypothetical two-dimensional camera-based trajectory to a radial distance, where the mapping takes place between the hypothetical two-dimensional camera-based trajectory in question to corresponding directional information in the hypothetical radar information, and the radial distance for the hypothetical two-dimensional camera-based trajectory in question is selected as the radial distance corresponding to the mapped directional data in the hypothetical radar information. Hence, flow E describes a more direct way of constructing a hypothetical three-dimensional camera-based trajectory. This hypothetical three-dimensional camera-based trajectory can then be fed back to operation 205, that can be configured to proceed as generally described above.

Figure 2c also shows flow F, which is another possibility. In flow F, both directional information as well as distance/speed information is acquired regarding one or more hypothetical moving objects 30 moving through the three-dimensional space 1 in relation to the radar 120. Then, one or more corresponding hypothetical three-dimensional radar-based trajectories are determined as generally described above, in operation 215, preferably without taking into consideration information from the camera 110.

Each of the one or more hypothetical three-dimensional radar-based trajectories are then mapped into image plane coordinates specific to the camera 110 to determine a set of one or more corresponding regions of interest 123, each corresponding to a location in the consecutively captured images 122 of a respective one of the one or more hypothetical moving objects 30. The regions of interest 123 can be of the general type described above.

One or more of the consecutively captured images 122 can then be analyzed to detect, only in the set of regions of interest 123, at least one blob 125. The detected blob 125 can be mapped, in the image plane coordinates, to one of the hypothetical three-dimensional radar-based trajectories. In some embodiments, at the most one such blob 125 per captured image 122 is mapped to each hypothetical three-dimensional radar-based trajectory.

This mapping can be performed by operation 230, that can also be configured to construct a hypothetical three-dimensional trajectory of each hypothetical object 30 based on the image location of the blob 125 in combination with the corresponding radial distance and/or speed information associated with the mapped hypothetical three-dimensional radar-based trajectory. This construction of the hypothetical three-dimensional trajectory can be performed without taking into consideration directional information associated with the mapped hypothetical three-dimensional radar-based trajectory. Hence, in such embodiments the directional radar-based information is only used to construct the hypothetical three-dimensional radar-based trajectory and to determine the region of interest.

In some embodiments, the digital image analyzer 130 can be configured to construct the hypothetical three-dimensional camera-based trajectory as generally described above, but using the regions of interest 123 provided by operation 230 and then using updated radar-based radial distance/speed information for the mapped hypothetical three-dimensional radar-based trajectory from the radar information analyzer 150 (in Figure 2c this information flow is illustrated as being mediated by operation 230).

In some embodiments, once a hypothetical three-dimensional radar-based trajectory has been mapped to a corresponding blob 125, operation 230 can be configured to continuously update the determined hypothetical three-dimensional trajectory based on updates from the radar information analyzer 150 regarding the hypothetical three-dimensional radar-based trajectory and updated blob 125 information (or alternatively an updated hypothetical two-dimensional camera-based trajectory) from the digital image analyzer 130.

In general, the hypothetical three-dimensional trajectory produced by operation 230 can replace and be used instead of the hypothetical three-dimensional trajectory produced by operation 221.

Then, the object 10 can be tracked as has generally been described above, based on the hypothetical trajectory or trajectories produced by the digital image analyzer 130, the radar information analyzer 150 and/or operation 230.

Since the methodology according to flow F can be designed to use regions of interest 123 that are relatively small, the analysis performed by the digital image analyzer 130 can be focused to only a small subset of each captured image 122. This results in that more elaborate blob 125 detection algorithms and/or filtering can be utilized and/or a higher-resolution camera 110. This, in turn, can result in improved directional precision, in particular for large object 10 distances, in the resulting hypothetical three-dimensional trajectory used to track the object 10.

In case an inability is identified to map the two-dimensional camera-based trajectory or blob 125 detected in the consecutively captured series of consecutively captured images 122 to any one of the hypothetical two-dimensional or three-dimensional radar-based trajectories, the hypothetical three-dimensional trajectory of the hypothetical object 30 can instead be determined only based on information from the camera 110 (i.e. as a hypothetical three-dimensional camera-based trajectory as described above) going forward, for instance until the inability is no longer detected and radar-based information regarding the hypothetical trajectory is again available. From that point on, tracking can revert to the mechanisms used before the identified inability.

In particular, in case operation 230 is used to continuously update the hypothetical three-dimensional trajectory used to track the object 10 based on blob 125 information provided by the digital image analyzer 130, a historic series of the consecutively captured images 122 can be stored in a digital memory. For instance, in such memory only a most recent set of the series of consecutively captured images 122 can be stored, as opposed to all of the consecutively captured images 122. This way, correlation of blobs 125 across different subsequent images 122 can be performed retroactively, in identified corresponding regions of interest 123, in order to determine an updated hypothetical two-dimensional camera-based trajectory to be matched to a particular radar-based distance/speed reading. It is understood that historical determined regions of interest 123 corresponding to the stored captured images 122 can also be stored and used for such detection. In some embodiments, retroactive regions of interest 123 can be determined based on updated (for the retroactive time in question) hypothetical radar information, for instance as a hypothetical three-dimensional radar-based trajectory is constructed over time based on consecutive readings of the hypothetical radar information.

In some embodiments, the storing of the series of consecutively captured images 122 in the memory comprises storing the series of consecutively captured images 122 in a circular buffer, so that a most recently captured image 122 overwrites an oldest stored captured image 122 in the circular buffer. In various embodiments, it is only necessary to store retroactive images 122 covering a typical time period for the movement of one of the objects 20 from start to finish, such as at the most ten times, such as at the most five times, or even at the most twice such time period. In some embodiments, however, the circular buffer can hold much more data, such as more than 1 second; and/or at the most 60 seconds, at the most 30 seconds or at the most 20 seconds. This will more easily allow the retroactive capture of a video sequence showing the moving object, for instance for viewing on a screen display to a user.

It is noted that flow F in a way uses the hypothetical radar information as the primary source of information, which is then verified and possibly ameliorated (in terms of direction to the hypothetical object 30) using information from the camera 110. Instead of independently assessing a hypothetical camera-based trajectory in parallel to a corresponding hypothetical radar-based trajectory and then to match the two to achieve a three-dimensional trajectory tracking the object 10, flow F instead looks locally for potential blobs 125 using a detected hypothetical three-dimensional radar-based trajectory, and then uses matched blobs 125 to verify and possibly improve the hypothetical three-dimensional radar-based trajectory to achieve the three-dimensional trajectory tracking the object 10.

In some embodiments, a physics model 231 can be employed by operation 230 to verify, filter and/or adjust the three-dimensional trajectory constructed by operation 230.

In these and other embodiments, the radar information analyzer 150 can use a physics model to verify, filter and/or adjust the hypothetical three-dimensional radar-based trajectory in a way that can be as generally discussed above. The latter verification/filtering/adjustment by the radar information analyzer 150 can hence be performed only based on the hypothetical radar information, without taking into consideration, and even before, the blob 125 detection performed based on the region of interest 123 that then in turn is determined based on the resulting hypothetical three-dimensional radar-based trajectory. On the one hand, usage of a physics model 231 can be computationally expensive. However, on the other hand physics model 231 filtering can result in that a potentially large share of unreasonable hypothetical three-dimensional radar-based trajectories can be removed before further analysis resources are unnecessarily spent on them in terms of blob analysis.

In some embodiments, which are primarily beneficial in cases using a radar 120 with relatively good directional performance, the captured images 122 can be used only to verify hypothetical three-dimensional radar-based trajectories. Hence, once the at least one region of interest 123 has been determined for a hypothetical three-dimensional radar-based trajectory, a blob 125 is detected in the region of interest in question with the sole purpose of verifying the hypothetical three-dimensional àradar-based trajectory. Hence, if a corresponding blob 125 is found, the hypothetical three-dimensional radar-based trajectory is verified as accurate, otherwise not. This will then imply that the system 100 uses only the hypothetical radar information for the actual tracking of the object 10, and the information from the camera 110 only to verify/filter the entirely radar-based three-dimensional tracking. However, in cases where the camera 110 is capable of providing better directional information than the radar 120, then it is possible to also use the detected blob 125 to adjust/improve the directionality of the hypothetical three-dimensional radar-based trajectory, using the blob as a more precise source of information regarding a current direction to the object 10. Furthermore, in case the radar 120 is detected to become unable to track the object 10, the method can fall back to tracking partly or completely using the camera 110, in a way that can correspond to what has been described above with respect to the falling back to the hypothetical radar information during times when an inability of the camera 110 to see the object 10 is detected.

In some cases, the digital image analyzer 130 can be configured to continuously construct hypothetical two-dimensional and/or three-dimensional camera-based trajectories as generally described above. In such cases, information regarding such camera-based trajectories can be passed, in a feedback flow, to the operation 230. Then, operation 230 can use this information to verify/filter the three-dimensional trajectory produced in operation 230 before passing it to the object tracker 140.

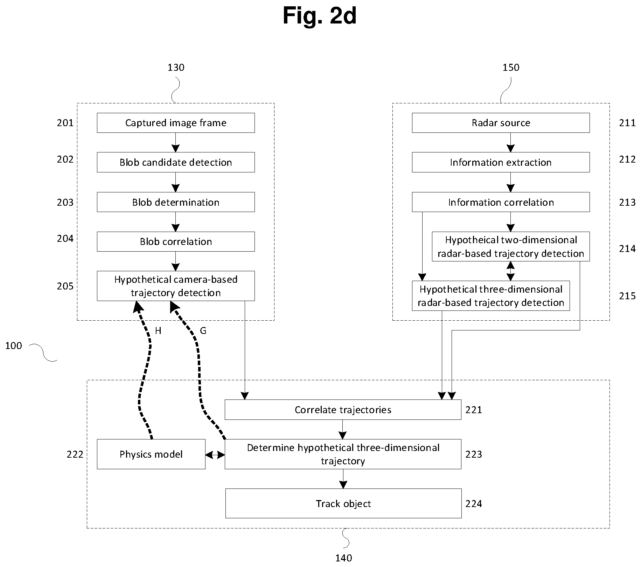

Figure 2d illustrates yet additional flows G and H that can be employed by the system 100.

As is the case for Figures 2a-2c, Figure 2d illustrates a method for tracking the object 10 moving through the three-dimensional space 1 within the field of view 111 of the digital camera 110.

As has been described above, in operations 201-205 and 211-215, hypothetical two-dimensional or three-dimensional radar-based trajectories and hypothetical two-dimensional or three-dimensional camera-based trajectories are determined by the radar information analyzer 150 and the digital image analyzer 130, respectively. Then, the hypothetical radar-based trajectories and the hypothetical camera-based trajectories are correlated, by the object tracker 140, to find matching pairs of one hypothetical radar-based trajectory to one hypothetical camera-based trajectory. It is realized that any of the above-described variants, and in particular flows A-F, can be employed also in the method illustrated in Figure 2d.

As also described above, the object tracker 140 determines one or more hypothetical three-dimensional trajectories of the hypothetical objects 30 based on respective correlated pairs of one of the one or more hypothetical camera-based trajectories in combination with one of the one or more hypothetical radar-based trajectories, and further determines a three-dimensional trajectory 11 of the object 10 through the three-dimensional space 1 as one of the one or more hypothetical three-dimensional trajectories.

Figure 2d also shows flows G and H. According to flow G, the method further comprises feeding back information relating to the three-dimensional trajectory 11 from operation 223 to operation 205, in other words to the operation performed by the digital image analyzer 130 of analyzing the series of consecutively captured images 122. The fed back information serves to alter the results of the analyzing performed in operation 122 in iterations of this operation 122 performed after the feeding back.

In some embodiments, the one or more hypothetical radar-based trajectories are two-dimensional or three-dimensional trajectories, as generally described above. Similarly, in some embodiments, the one or more hypothetical camera-based trajectories are two-dimensional trajectories of the above-described general type.

In order to be able to correlate the hypothetical radar-based trajectories to the hypothetical camera-based trajectories, the trajectories can be transformed, as needed, into a common coordinate system. The common coordinate system can be the image plane coordinates specific to the camera 110.

In particular, in case the hypothetical radar-based trajectories are two-dimensional trajectories, the one or more two-dimensional radar-based trajectories can be transformed into the image plane coordinates specific to the camera 110, or into some other common coordinate system in which the hypothetical camera-based trajectories are also represented (such as via a separate transformation).

In the general case, flows G and H do not require hypothetical radar information other than directional information. However, in some embodiments radial distance and/or speed information is also obtained from the radar 120 regarding the one or more hypothetical moving objects 30 in relation to the radar 120. Then, the one or more hypothetical three-dimensional radar-based trajectories can be determined based on both directional and distance/speed information of the hypothetical radar information. Each of these hypothetical three-dimensional radar-based trajectories can then be transformed into the image plane coordinates specific to the digital camera 110, or into the common coordinate system as discussed, to achieve the one or more hypothetical two-dimensional radar-based trajectories.

The fed back information from operation 223, regarding the three-dimensional trajectory, can comprise a full or partial updated information about a current location of the object 10 in two dimensions (such as in the image plane coordinates) or in three dimensions. The digital image analyzer 130 can use this information by associating it with the particular hypothetical two-dimensional or three-dimensional camera-based trajectory that was paired with a corresponding hypothetical radar-based trajectory to form the three-dimensional trajectory used by the object tracker 140 to track the object 10. Then, the fed back information can be used in operation 205 to adjust or correct the produced hypothetical camera-based trajectory going forward.

For instance, the fed back information can be used together with the available set of detected blobs 125 to produce an improved version of the hypothetical camera-based trajectory, but using the fed back information to determine a historical trace of the hypothetical camera-based trajectory instead of, or in addition to, the available historical blobs 125 to calculate the hypothetical camera-based trajectory.

In case the fed back information is a two-dimensional projection of the three-dimensional trajectory onto the image plane coordinates of the camera 110, the fed back information can be used as-is as the historic hypothetical two-dimensional camera-based trajectory from which to build by adding recently added blobs 125 in subsequent ones of the consecutively captured images 122 going forward.

In case the fed back information is the three-dimensional trajectory as-is, it can either be projected, by the digital image analyzer 130, onto the image plane coordinates and used in the same manner; or it can be used as-is as the historic hypothetical three-dimensional camera-based trajectory from which to build based on recently added blobs 125 in subsequent ones of the consecutively captured images 122 going forward. Since the blobs 125 are detected in two dimensions, such building of the hypothetical three-dimensional camera-based trajectory is performed as generally described above, using heuristics, presumptions, a potential physics model and so forth. Such building is, however, easier to do with precision if starting out from the fed back three-dimensional trajectory, which can then be considered more accurate than a corresponding hypothetical three-dimensional trajectory determined only based on available blob 125 data.

Flow H can be used as an alternative or complement to flow G. In flow H, the three-dimensional trajectory 11 is adjusted based on the physics model in operation 222 before the operation of feeding back. The physics model is a model of the object 10 travelling through the three-dimensional space 1, that can be specific for the use case, such as the hitting of golf balls as described above. The adjustment can comprise an adjustment of the three-dimensional trajectory 11 to filter out outliers and/or to fit the three-dimensional trajectory 11 to better fit a physically realistic three-dimensional trajectory as expected for the use case in questions.

The fed back information can also be used by the digital image analyzer 130 to, in operation 205, determine which one of an available set of hypothetical two-dimensional or three-dimensional camera-based trajectories to use as the hypothetical camera-based trajectory to track the object 10 going forward. For instance, it may be the case that two or more similar hypothetical camera-based trajectories exist and that one of them was paired with a corresponding hypothetical radar-based trajectory to form the three-dimensional trajectory 11. However, given the information regarding the resulting three-dimensional trajectory 11, the digital image analyzer 130 may be able to determine that the paired hypothetical camera-based trajectory fits the three-dimensional trajectory 11 worse than an alternative hypothetical camera-based trajectory. As a result, the digital image analyzer 130 can discontinue the paired hypothetical camera-based trajectory and/or instruct the object tracker 140 to instead use the alternative hypothetical camera-based trajectory.

The fed back information can also be used by the digital image analyzer 130 to, in operation 205, alter the properties, such as the shape, of one or more hypothetical two-dimensional or three-dimensional camera-based trajectories.

In general, the operation of feeding back can comprise using the information relating to the three-dimensional radar-based trajectory 11 to determine one or more of the two or more hypothetical two-dimensional or three-dimensional camera-based trajectories, such as determining its shape or status. In particular, the hypothetical camera-based trajectory used by the object tracker 140 to determine the three-dimensional trajectory 11 used to track the object 10 can be determined at least partly based on the fed back information. The fed back information can be used to affect both the properties, such as the shape, of the hypothetical camera-based trajectory historically and/or going forward.

Hence, the digital image analyzer 130 can use the fed back information to update one or more of the two or more hypothetical two-dimensional or three-dimensional camera-based trajectories, and in particular the hypothetical camera-based trajectory used to determine the three-dimensional trajectory 11 used to track the object 10, over time based on updated fed back information relating to the three-dimensional trajectory 11. This flow G and/or H then creates a feedback loop.

In the above-described embodiments, the blobs 125 are determined as two-dimensional blobs 125. However, in one or more of the above-described embodiments, the blobs 125 can alternatively be determined as three-dimensional blobs. Then, the digital image analyzer 130 can receive, from the radar information analyzer 150 or directly from the radar 120, one or more radial distances and/or radial speeds with respect to hypothetical objects 30 moving through the three-dimensional space 1. Then, a set of three-dimensional blobs can be determined by combining each of the one or more blobs 125 determined as described above, based on the consecutively captured images 122, individually with one or two or more of the received radial distances and/or radial speeds. In some embodiments, no regard is given to any directional information of the hypothetical radar information in the determination of such three-dimensional blobs. It may even be the case that each two-dimensional blob 125 is combined with each of two or more received distinct distance and/or speed values. Similarly to what has been described above regarding operations 202-204, the resulting set of three-dimensional blobs can relate to two or more ones of the consecutively captured images 122. Then, in operation 204 the set of three-dimensional blobs can be correlated across different ones of the consecutively captured images 122 to form one or more hypothetical three-dimensional trajectories for one or more hypothetical objects 30. It is noted that, in this case, the hypothetical three-dimensional trajectories correspond to, and can be used correspondingly to, the hypothetical three-dimensional camera-based trajectories, but that they are constructed immediately from the available cloud of three-dimensional blobs instead of being constructed from hypothetical two-dimensional camera-based trajectories using various heuristics, presumptions, physics models, etc. Finally, the trajectory 11 of the object 10 can be determined, by the object tracker 140, as, or based on, one of the hypothetical three-dimensional trajectories, with or without a mapping to a corresponding hypothetical radar-based trajectory. For instance, the hypothetical three-dimensional trajectories can be matched pairwise with corresponding hypothetical three-dimensional radar-based trajectories in a way corresponding to what has been discussed above with respect to hypothetical three-dimensional camera-based trajectories.

By, instead of limiting the definition of blobs 125 to information from the camera 110, producing a cloud of three-dimensional blobs using as the third dimension a plurality of different measured radar-based radial distances and/or radial speeds, the number of detected blobs generally increases dramatically. Most of the detected three-dimensional blobs will likely be noise, not least since each detected two-dimensional blob 125 in each captured image 122 may be paired with two or more different distances/speeds. However, on the flip side the determination of the hypothetical three-dimensional camera-based trajectories can in some embodiments be less computationally heavy as compared to first determining hypothetical two-dimensional camera-based trajectories and then transforming them into corresponding three-dimensional trajectories.

Above, preferred embodiments have been described. However, it is apparent to the skilled person that many modifications can be made to the disclosed embodiments without departing from the basic idea of the invention.

For instance, the methods, systems and computer programs described herein can comprise additional features and functions in addition to the ones described.

In general, all the embodiments described herein are freely combinable pending compatibility, and can be used freely across described systems, methods and computer programs. This particularly applies to the various described flows A-H.

For example, the described methodology using three-dimensional blobs can be combined with the usage of hypothetical radar-based trajectories as illustrated in, and described in connection to, Figures 2a-2d to prioritize what pixels 124 or blobs 125 to analyze in each captured image 122. This can be a way to decrease the potentially massive amounts of three-dimensional blobs that can otherwise accrue.

Throughout this description, radial distance information and radial speed information as measured by the radar 120 has been discussed interchangeably. It is realized that distance and speed can be transformed one into the other by a simple derivative or integral with respect to time, and that these two metrics can therefore be treated as exchangeable.

Hence, the invention is not limited to the described embodiments, but can be varied within the scope of the enclosed claims.

Examples: Although the present application is defined in the attached claims, it should be understood that the present invention can also be (alternatively) defined in accordance with the following examples:

Example 1: Method for tracking an object (10) moving through a three-dimensional space (1) within a field of view (111) of a digital camera (110), comprising:

obtaining from a radar (120) directional information (126) regarding the object (10) in relation to the radar (120);

obtaining from the digital camera (110) a series of consecutively captured images (122) representing optical input from the three-dimensional space (1);

transforming the directional information (126) into image plane coordinates specific to the digital camera (110) to determine a region of interest (123) corresponding to a location in the consecutively captured images (122) of the object (10);

for each of a plurality of pixels (124) of the images (122), determining if the pixel (124) is a blob candidate by determining if a current signal value for the pixel (124) deviates from a baseline value for the pixel (124) by more than a pixel signal noise threshold value;

combining individual ones of the plurality of pixels (124) having been determined to be blob candidates into one or more blobs (125); and

correlating respective blobs (125) in two or more different images of the series of consecutively captured images (122) to determine a trajectory (11) of the object (10) through the three-dimensional space (1), wherein

the determining if individual ones of the plurality of pixels (124) are blob candidates (124) is performed based on the region of interest (123) by the method comprising at least one of

performing the determining of if individual ones of the plurality of pixels (124) are blob candidates only with respect to pixels (124) of the plurality of pixels (124) that are within the region of interest (123) and not with respect to pixels (124) of the plurality of pixels (124) that are not within the region of interest (123);

performing the determining of if individual ones of the plurality of pixels (124) are blob candidates with respect to pixels (124) of the plurality of pixels (124) that are within the region of interest (123) before pixels (124) of the plurality of pixels (124) that are outside of the region of interest (123); and

determining of respective pixel noise threshold values for individual ones of the plurality of pixels (124) based on the region of interest (123) so that pixel noise threshold values for pixels (124) of the plurality of pixels (124) that are within the region of interest (123) are determined to be relatively lower than pixel noise threshold values for pixels (124) of the plurality of pixels (124) that are outside of the region of interest (123).

Example 2: Method according to Example 1, comprising

obtaining from the radar (120) updated directional information (126) regarding the object (10) in relation to the radar (120);

transforming the updated directional information (126) into the image plane coordinates to determine an updated region of interest (123) corresponding to a location in the consecutively captured images (122) of the object (10); and

determining if individual pixels (124) of the plurality of pixels (124) are blob candidates based on the updated region of interest (123).

Example 3: Method according to Examples 1 or 2, comprising

obtaining from the radar (120) radial distance and/or speed information (126) regarding the object (10) in relation to the radar (120);

calculating, based on the directional information and the radial distance and/or speed information, a three-dimensional radar-based trajectory of the object (10);

projecting the three-dimensional radar-based trajectory onto the image plane coordinates of the consecutively captured images (122) to achieve a two-dimensional radar-based trajectory; and

determining the region of interest (123) based on the two-dimensional radar-based trajectory.

Example 4: Method according to any preceding Example, comprising

extrapolating, based on the directional information, a radar-based trajectory of the object (10) to achieve an expected future location of the object (10); and
determining the region of interest (123) based on the expected future location of the object (10).

Example 5: Method according to any preceding Example, comprising

obtaining from the radar (120) directional information (126) regarding two or more concurrent objects (20) in relation to the radar (120);
determining two or more concurrent regions of interest corresponding to the directional information; and
the determining if individual pixels (124) of the plurality of pixels (124) are blob candidates based on each of the two or more concurrent regions of interest.

Example 6: Method according to any preceding Example, wherein
the determining of if individual pixels (124) of the plurality of pixels (124) are blob candidates is performed until an available or allocated computing resource has been exhausted.

Example 7: Method according to any preceding Example, comprising

determining a measurement of a confidence value of the directional information; and
determining the region of interest (123) based on the confidence value.

Example 8: Method according to Example 7, wherein the confidence value is determined based on a signal-to-noise value of the radar (120).

Example 9: Method according to Example 7 or 8, wherein
a distribution, across the image plane coordinates, of the region of interest (123) is determined based on the confidence value.

Example 10: Method according to any preceding Example, comprising

determining, for two or more of the consecutively captured images (122), a corresponding set of one or more of the respective blobs (125); and
correlating the determined set of one or more of the respective blobs (125) to each other across the two or more of the consecutively captured images (122), to form a set of one or more hypothetical camera-based trajectories for one or more hypothetical objects (30).

Example 11: Method according Example 10, comprising

applying a physics model to determine credibility of the hypothetical camera-based trajectories; and
disregarding one or more of the hypothetical camera-based trajectories based on the determined credibility.

Example 12: Method according Example 11, wherein

the physics model is a three-dimensional physics model, and
the hypothetical camera-based trajectories are hypothetical three-dimensional camera-based trajectories.

Example 13: Method according to any preceding Example, comprising

obtaining from the radar (120), at two or more different points in time, radial distance and/or speed information (126) as well as directional information (126) regarding one or more hypothetical moving objects (30) in relation to the radar (120) to form hypothetical radar-based object information; and
correlating the hypothetical radar-based object information across the two or more different points in time to form one or more hypothetical three-dimensional radar-based trajectories for the one or more hypothetical objects (30).

Example 14: Method according Example 13, comprising

applying a physics model to determine credibility of the hypothetical radar-based three-dimensional trajectories; and
disregarding one or more of the hypothetical radar-based three-dimensional trajectories based on the determined credibility.

Example 15: Method according to any preceding Example, including Example 10 and Example 13, comprising

correlating, with respect to time and a common coordinate system, the one or more hypothetical camera-based trajectories with the one or more hypothetical three-dimensional radar-based trajectories to achieve one or more hypothetical three-dimensional trajectories for one or more hypothetical objects (30); and
determining a three-dimensional trajectory (11) for the object (10) as one of the hypothetical three-dimensional trajectories.

Example 16: Method according any one of Examples 1-9, comprising

> obtaining from the radar (120) one or more radial distances and/or radial speeds (126) regarding one or more moving objects (20) in relation to the radar (120);
> determining a set of three-dimensional blobs by combining each of the respective blobs (125) individually with two or more of, such as each of, the one or more radial distances and/or speeds (126), the set of three-dimensional blobs relating to the different images of the consecutively captured images (122); and
> correlating the set of three-dimensional blobs to form one or more hypothetical three-dimensional trajectories for one or more hypothetical objects (30); and
> determining a trajectory (11) for the object (10) as, or based on, one of the hypothetical three-dimensional trajectories.

Example 17: Method according Examples 15 or 16, comprising

> applying a physics model to determine credibility of the one or more hypothetical three-dimensional trajectories; and wherein
> the determining of the trajectory (11) for the object (10) as one of the one or more hypothetical three-dimensional trajectories is performed based on the applying of the physics model.

Example 18: System (100) for tracking an object (10) moving through a three-dimensional space (1) within a field of view (111) of a digital camera (110), the system comprising:

> a radar information analyzer (150) configured to obtain, from a radar (120), directional information regarding the object (10) in relation to the radar (120); and
> a digital image analyzer (130) configured to obtain, from the digital camera (110), a series of consecutively captured images (122) representing optical input from the three-dimensional space (1),
> the system (100) further being configured to transform the directional information into image plane coordinates specific to the digital camera (110) to determine a region of interest (123) corresponding to a location in the consecutively captured images (122) of the object (10);
> for each of a plurality of pixels (124) of the images (122), determine if the pixel (124) is a blob candidate by determining if a current signal value for the pixel (124) deviates from a baseline value for the pixel (124) by more than a pixel signal noise threshold value;
combine individual ones of the plurality of pixels (124) having been determined to be blob candidates into one or more blobs (125); and
correlate the respective blobs (125) in two or more different images of the series of consecutively captured images (122) to determine a trajectory (11) of the object (10) through the three-dimensional space (1), wherein
the determining if individual ones of the plurality of pixels (124) are blob candidates (124) is performed based on the region of interest (123) by the system being configured to perform at least one of

> the determining of if individual ones of the plurality of pixels (124) are blob candidates only with respect to pixels (124) of the plurality of pixels (124) that are within the region of interest (123) and not with respect to pixels (124) of the plurality of pixels (124) that are not within the region of interest (123);
> the determining of if individual ones of the plurality of pixels (124) are blob candidates with respect to pixels (124) of the plurality of pixels (124) that are within the region of interest (123) before pixels (124) of the plurality of pixels (124) that are outside of the region of interest (123); and
> the determining of respective pixel noise threshold values for individual ones of the plurality of pixels (124) based on the region of interest (123) so that pixel noise threshold values for pixels (124) of the plurality of pixels (124) that are within the region of interest (123) are determined to be relatively lower than pixel noise threshold values for pixels (124) of the plurality of pixels (124) that are outside of the region of interest (123).

Example 19: Computer program product for tracking an object (10) moving through a three-dimensional space (1) within a field of view (111) of a digital camera (110), the computer program product configured to, when executing on one or more processors, perform operations comprising:

> obtaining from a radar (120) directional information regarding the object (10) in relation to the radar (120);
> obtaining from the digital camera (110) a series of consecutively captured images (122) representing optical input from the three-dimensional space (1);
> transforming the directional information into image plane coordinates specific to the digital camera (110) to determine a region of interest (123) corresponding to a location in the consecutively captured images (122) of the object (10);

for each of a plurality of pixels (124) of the images (122), determining if the pixel (124) is a blob candidate by determining if a current signal value for the pixel (124) deviates from a baseline value for the pixel (124) by more than a pixel signal noise threshold value;

combining individual ones of the plurality of pixels (124) having been determined to be blob candidates into one or more blobs (125); and correlating the respective blobs (125) in two or more different images of the series of consecutively captured images (122) to determine a trajectory (11) of the object (10) through the three-dimensional space (1), wherein

the determining if individual ones of the plurality of pixels (124) are blob candidates (124) is performed based on the region of interest (123) by the computer program being configured to, when executed on the one or more processors, perform at least one of

> the determining of if individual ones of the plurality of pixels (124) are blob candidates only with respect to pixels (124) of the plurality of pixels (124) that are within the region of interest (123) and not with respect to pixels (124) of the plurality of pixels (124) that are not within the region of interest (123);
>
> the determining of if individual ones of the plurality of pixels (124) are blob candidates with respect to pixels (124) of the plurality of pixels (124) that are within the region of interest (123) before pixels (124) of the plurality of pixels (124) that are outside of the region of interest (123); and
>
> determining of respective pixel noise threshold values for individual ones of the plurality of pixels (124) based on the region of interest (123) so that pixel noise threshold values for pixels (124) of the plurality of pixels (124) that are within the region of interest (123) are determined to be relatively lower than pixel noise threshold values for pixels (124) of the plurality of pixels (124) that are outside of the region of interest (123).

**Claims**

1. Method for tracking an object (10) moving through a three-dimensional space (1) within a field of view (111) of a digital camera (110), comprising:

obtaining from a radar (120) directional information (126) regarding the object (10) in relation to the radar (120);

obtaining from the digital camera (110) a series of consecutively captured images (122) representing optical input from the three-dimensional space (1);

transforming the directional information (126) into image plane coordinates specific to the digital camera (110) to determine a region of interest (123) corresponding to a location in the consecutively captured images (122) of the object (10);

for each of a plurality of pixels (124) of the images (122), determining if the pixel (124) is a blob candidate by determining if a current signal value for the pixel (124) deviates from a baseline value for the pixel (124) by more than a pixel signal noise threshold value;

combining individual ones of the plurality of pixels (124) having been determined to be blob candidates into one or more blobs (125); and correlating respective blobs (125) in two or more different images of the series of consecutively captured images (122) to determine a trajectory (11) of the object (10) through the three-dimensional space (1), wherein

determining if individual ones of the plurality of pixels (124) are blob candidates (124) is performed based on the region of interest (123) by performing at least one of

> determining if individual ones of the plurality of pixels (124) are blob candidates only with respect to pixels (124) of the plurality of pixels (124) that are within the region of interest (123) and not with respect to pixels (124) of the plurality of pixels (124) that are not within the region of interest (123),
>
> determining if individual ones of the plurality of pixels (124) are blob candidates with respect to pixels (124) of the plurality of pixels (124) that are within the region of interest (123) before pixels (124) of the plurality of pixels (124) that are outside of the region of interest (123), and
>
> determining respective pixel signal noise threshold values for the individual ones of the plurality of pixels (124) based on the region of interest (123) so that pixel signal noise threshold values for pixels (124) of the plurality of pixels (124) that are within the region of interest (123) are determined to be relatively lower than pixel signal noise threshold values for pixels (124) of the plurality of pixels (124) that are outside of the region of interest (123).

**2.** Method according to claim 1, comprising:

obtaining from the radar (120) updated directional information (126) regarding the object (10) in relation to the radar (120); transforming the updated directional information (126) into the image plane coordinates to determine an updated region of interest (123) corresponding to a location in the consecutively captured images (122) of the object (10); and determining if individual pixels (124) of the plurality of pixels (124) are blob candidates based on the updated region of interest (123).

**3.** Method according to claim 1 or 2, comprising:

obtaining from the radar (120) radial distance and/or speed information (126) regarding the object (10) in relation to the radar (120); calculating, based on the directional information and the radial distance and/or speed information, a three-dimensional radar-based trajectory of the object (10); projecting the three-dimensional radar-based trajectory onto the image plane coordinates of the consecutively captured images (122) to achieve a two-dimensional radar-based trajectory; and determining the region of interest (123) based on the two-dimensional radar-based trajectory.

**4.** Method according to any preceding claim, comprising:

extrapolating, based on the directional information, a radar-based trajectory of the object (10) to achieve an expected future location of the object (10); and determining the region of interest (123) based on the expected future location of the object (10).

**5.** Method according to any preceding claim, comprising:

obtaining, from the radar (120), directional information (126) regarding two or more concurrent objects (20) in relation to the radar (120); determining two or more concurrent regions of interest corresponding to the directional information; and wherein determining if the individual pixels (124) of the plurality of pixels (124) are blob candidates is performed based on each of the two or more concurrent regions of interest.

**6.** Method according to any preceding claim, wherein determining if the individual pixels (124) of the plurality of pixels (124) are blob candidates is performed until an available or allocated computing resource has been exhausted.

**7.** Method according to any preceding claim, comprising:

determining a measurement of a confidence value of the directional information; and determining the region of interest (123) based on the confidence value, optionally wherein the confidence value is determined based on a signal-to-noise value of the radar (120, further optionally wherein a distribution, across the image plane coordinates, of the region of interest (123) is determined based on the confidence value.

**8.** Method according to any preceding claim, comprising:

determining, for two or more of the consecutively captured images (122), a corresponding set of one or more of the respective blobs (125); and correlating the determined set of one or more of the respective blobs (125) to each other across the two or more of the consecutively captured images (122), to form a set of one or more hypothetical camera-based trajectories for one or more hypothetical objects (30).

**9.** Method according to claim 8, comprising:

applying a physics model to determine credibility of the hypothetical camera-based trajectories; and disregarding one or more of the hypothetical camera-based trajectories based on the determined credibility, optionally wherein the physics model is a three-dimensional physics model, and the hypothetical camera-based trajectories are hypothetical three-dimensional camera-based trajectories.

**10.** Method according to any preceding claim, comprising:

obtaining from the radar (120), at two or more different points in time, radial distance and/or speed information (126) as well as directional information (126) regarding one or more hypothetical moving objects (30) in relation to the radar (120) to form hypothetical radar-based object information; and correlating the hypothetical radar-based object information across the two or more different points in time to form one or more hypothetical three-dimensional radar-based trajectories for the one or more hypothetical objects (30), wherein the method optionally comprises:

applying a physics model to determine credibility of the hypothetical radar-based three-dimensional trajectories; and
disregarding one or more of the hypothetical radar-based three-dimensional trajectories based on the determined credibility.

11. Method according to any preceding claim, comprising:

correlating, with respect to time and a common coordinate system, the one or more hypothetical camera-based trajectories with the one or more hypothetical three-dimensional radar-based trajectories to achieve one or more hypothetical three-dimensional trajectories for one or more hypothetical objects (30); and
determining a three-dimensional trajectory (11) for the object (10) as one of the hypothetical three-dimensional trajectories.

12. Method according any one of claims 1-7, comprising:

obtaining from the radar (120) one or more radial distances and/or radial speeds (126) regarding one or more moving objects (20) in relation to the radar (120);
determining a set of three-dimensional blobs by combining each of the respective blobs (125) individually with two or more of, such as each of, the one or more radial distances and/or speeds (126), the set of three-dimensional blobs relating to the different images of the consecutively captured images (122); and
correlating the set of three-dimensional blobs to form one or more hypothetical three-dimensional trajectories for one or more hypothetical objects (30); and
determining a trajectory (11) for the object (10) as, or based on, one of the hypothetical three-dimensional trajectories.

13. Method according claims 11 or 12, comprising:

applying a physics model to determine credibility of the one or more hypothetical three-dimensional trajectories; and
wherein determining the trajectory (11) for the object (10) as one of the one or more hypothetical three-dimensional trajectories is performed based on the applying of the physics model.

14. System (100) for tracking an object (10) moving through a three-dimensional space (1) within a field of view (111) of a digital camera (110), the system comprising:

a radar information analyzer (150) configured to obtain, from a radar (120), directional information regarding the object (10) in relation to the radar (120); and
a digital image analyzer (130) configured to obtain, from the digital camera (110), a series of consecutively captured images (122) representing optical input from the three-dimensional space (1),
the system (100) further being configured to perform operations of the method of any one of claims 1 to 13.

15. Computer program product for tracking an object (10) moving through a three-dimensional space (1) within a field of view (111) of a digital camera (110), the computer program product configured to, when executing on one or more processors, perform operations according to the method of any one of claims 1 to 13.

# Fig. 1

# Fig. 2a

**130**

- 201 Captured image frame
- 202 Blob candidate detection
- 203 Blob determination
- 204 Blob correlation
- 205 Hypothetical camera-based trajectory detection

**150**

- 211 Radar source
- 212 Information extraction
- 213 Information correlation
- 214 Hypotheical two-dimensional radar-based trajectory detection
- 215 Hypothetical three-dimensional radar-based trajectory detection

**100**

**140**

- 221 Correlate trajectories
- 222 Physics model
- 223 Determine hypothetical three-dimensional trajectory
- 224 Track object

# Fig. 2b

130

150

201 Captured image frame
202 Blob candidate detection
203 Blob determination
204 Blob correlation
205 Hypothetical camera-based trajectory detection

A
B
C
C
C

211 Radar source
212 Information extraction
213 Information correlation
214 Hypotheical two-dimensional radar-based trajectory detection
215 Hypothetical three-dimensional radar-based trajectory detection

100

221 Correlate trajectories
222 Physics model
223 Determine hypothetical three-dimensional trajectory
224 Track object

140

# Fig. 2c

# Fig. 2d

# Fig. 3

300

## Data Processing Apparatus

**Applications**  330

Digital image analysis;
Radar information analyzer;
Target object tracking

**Operating System**

**Hardware/Firmware**  316

Computer Readable Medium

312
Processor(s)

318
Comm. Interface

314
Additional Device(s)

320
User Interface Device(s)

390

Network

380

# Fig. 4

# Fig. 5

# Fig. 6a

Automatic Launch Position Robot Antenna
Camera: Focal Length: 28.0mm ; Chip Size: 16.64x16.64mm
Reasonable [Horizontal/Vertical] Angle to Launch: H: 38.66deg V: 18.22deg

# Fig. 6b

Automatic Launch Position Robot Antenna
Camera: Focal Length: 16.0mm ; Chip Size: 16.64x16.64mm
Reasonable [Horizontal/Vertical] Angle to Launch: H: 38.66deg V: 18.22deg

# Fig. 7

123

122

11

Europäisches
Patentamt
European
Patent Office
Office européen
des brevets

# EUROPEAN SEARCH REPORT

**Application Number**

EP 25 20 0423

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/223378 A1 (TUXEN FREDRIK [DK] ET AL) 22 July 2021 (2021-07-22) * paragraph [0049] - paragraph [0057]; figures 1,7 * * paragraph [0038] * | 1-15 | INV. G01S13/58 G01S13/66 G01S13/86 G06T7/20 G06T7/292 |
| X | US 2016/320476 A1 (JOHNSON HENRI [US]) 3 November 2016 (2016-11-03) * paragraph [0040] - paragraph [0053]; figures 1,5 * * paragraph [0100] - paragraph [0114] * * paragraph [0139] * | 1-15 | |
| A | WO 2024/083537 A1 (TOPGOLF SWEDEN AB [SE]) 25 April 2024 (2024-04-25) * page 16 - page 18 * | 1 | |

**TECHNICAL FIELDS SEARCHED (IPC)**

G01S
G06T

The present search report has been drawn up for all claims

| Place of search | Date of completion of the search | Examiner |
|---|---|---|
| Munich | 9 February 2026 | Heiß, Michael |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...................................................................................................
& : member of the same patent family, corresponding
   document

EPO FORM 1503 03.82 (P04C01)

## EP 4 715 427 A1

### ANNEX TO THE EUROPEAN SEARCH REPORT
### ON EUROPEAN PATENT APPLICATION NO.

EP 25 20 0423

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2026

| Patent document cited in search report | | Publication date | Patent family member(s) | | Publication date |
|---|---|---|---|---|---|
| US 2021223378 A1 | | 22-07-2021 | CN | 109997054 A | 09-07-2019 |
| | | | EP | 3548923 A1 | 09-10-2019 |
| | | | JP | 7254142 B2 | 07-04-2023 |
| | | | JP | 2020515810 A | 28-05-2020 |
| | | | JP | 2022017330 A | 25-01-2022 |
| | | | KR | 20190085152 A | 17-07-2019 |
| | | | KR | 20210104912 A | 25-08-2021 |
| | | | KR | 20220057653 A | 09-05-2022 |
| | | | US | 2018156914 A1 | 07-06-2018 |
| | | | US | 2021223378 A1 | 22-07-2021 |
| | | | US | 2024045021 A1 | 08-02-2024 |
| | | | WO | 2018104844 A1 | 14-06-2018 |
| US 2016320476 A1 | | 03-11-2016 | US | 2016320476 A1 | 03-11-2016 |
| | | | US | 2020025907 A1 | 23-01-2020 |
| | | | WO | 2016176487 A1 | 03-11-2016 |
| WO 2024083537 A1 | | 25-04-2024 | EP | 4605885 A1 | 27-08-2025 |
| | | | JP | 2025535304 A | 24-10-2025 |
| | | | SE | 2230331 A1 | 18-04-2024 |
| | | | WO | 2024083537 A1 | 25-04-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10338209 B2
- US 10989791 B2
- US 10754025 B2
- US 2020269089 A1
- US 9855481 B2
- SE 22303317 A
- SE 22300461 A